# EUROPEAN PATENT SPECIFICATION

(11) **EP 4 465 644 B1**
(45) Date of publication and mention of the grant of the patent: **19.08.2026**
(21) Application number: 24712395.3
(22) Date of filing: 19.02.2024
(51) Int. Cl.: H04N 23/55, H04N 23/50, H04N 23/51, H04N 23/54, H04N 23/57, G02B 27/64, G02B 7/08, G03B 3/10, G03B 30/00, G03B 5/00, H02K 41/035

(54) **CAMERA MODULE AND ELECTRONIC DEVICE COMPRISING SAME**
KAMERAMODUL UND ELEKTRONISCHE VORRICHTUNG DAMIT
MODULE DE CAMÉRA ET DISPOSITIF ÉLECTRONIQUE LE COMPRENANT

(30) Priority: 31.03.2023 KR 20230042947; 05.07.2023 KR 20230087213
(43) Date of publication of application: 20.11.2024
(73) Proprietor: Samsung Electronics Co., Ltd., Suwon-si, Gyeonggi-do 16677 (KR)
(72) Inventor: YU, Changrim, Suwon-si Gyeonggi-do 16677 (KR)
(74) Representative: Gulde & Partner
(86) International application number: PCT/KR2024/095405
(87) International publication number: WO 2024/205357

(56) References cited:
- EP-A1- 4 164 207
- WO-A1-2022/010216
- KR-A- 20180 124 062
- KR-A- 20220 012 164
- KR-A- 20220 029 963
- KR-A- 20220 069 792
- KR-A- 20220 120 421
- US-A1- 2020 326 583
- US-A1- 2022 163 814
- US-A1- 2022 272 237

## Description

### [Technical Field]

Various embodiments of the disclosure relate to an electronic device, and for example, to a camera module and an electronic device including the same.

### [Background Art]

Developing electronics, information and communication technologies integrates various functionalities into a single electronic device. For example, smartphones include the functionalities of a sound player, imaging device, and digital diary, as well as communication functionality and may implement various functions by having applications installed thereon. An electronic device may not only be equipped with applications or stored files but may also access, wiredly or wirelessly, a server or another electronic device to receive, in real-time, various pieces of information. Camera modules and an electronic device including the same are disclosed in US 2022 / 0272237 A1, US 2022 / 0163814 A1, WO 2022 / 010216 A1 and US 2020 / 0326583 A1.

As display members and batteries are nowadays made smaller and have enhanced performance, wearable electronic devices which may be put on the user's wrist, head, or other body portions are commercially available. Wearable electronic devices may be directly worn on the human body, presenting better portability and user accessibility.

Wearable electronic devices may include electronic devices wearable on the user's face, such as head-mounted devices (HMDs). The head-mounted device may be usefully used to implement virtual reality or augmented reality. For example, the wearable electronic device may stereoscopically provide the image of the virtual space in the game played on TV or computer monitor and may implement virtual reality by blocking the real-world image of the space in which the user actually stays. Other types of wearable electronic devices may implement virtual images while providing an environment in which the real-world image of the space where the user actually stays may be visually perceived, thereby providing augmented reality to provide various pieces of visual information to the user.

In such an electronic device, camera modules for providing various functions may be provided. The electronic device may implement a capturing function using a plurality of cameras or a plurality of image sensors, thereby increasing the quality of the captured image or video.

The above-described information may be provided as background art to aid in understanding the disclosure. No claims or decisions are made regarding whether any of the above-described contents can be applied as prior art related to the disclosure.

### [Disclosure of Invention]

### [Solution to Problems]

According to the invention, a camera module according to claims 1 is provided.

According to another aspect of the invention, an electronic device according to claim 15 is provided.

### [Brief Description of Drawings]

FIG. 1 is a block diagram illustrating an electronic device in a network environment according to various embodiments of the disclosure;
FIG. 2 is a perspective view illustrating a front surface of an electronic device according to an embodiment of the disclosure;
FIG. 3 is a perspective view illustrating a rear surface of an electronic device according to an embodiment of the disclosure;
FIG. 4 is an exploded perspective view illustrating a front surface of an electronic device according to an embodiment of the disclosure;
FIG. 5 is an exploded perspective view illustrating a rear surface of an electronic device according to an embodiment of the disclosure;
FIG. 6 is a perspective view illustrating a camera module according to an embodiment of the disclosure;
FIG. 7 is a plan view illustrating a camera module according to an embodiment of the disclosure;
FIG. 8 is a cross-sectional view of FIG. 7, taken along line A-A'.
FIG. 9 is a cross-sectional view illustrating a camera module according to an embodiment of the disclosure;
FIG. 10 is a cross-sectional view illustrating a camera module according to an embodiment of the disclosure;
FIG. 11 is a cross-sectional view illustrating a yoke according to an embodiment of the disclosure;
FIG. 12 is a cross-sectional view illustrating a guide structure and a yoke according to an embodiment of the disclosure;
FIG. 13 is a cross-sectional view illustrating a guide structure and a yoke according to an embodiment of the disclosure;
FIG. 14 is a cross-sectional view illustrating a guide structure and a yoke according to an embodiment of the disclosure;
FIG. 15 is a cross-sectional view illustrating a guide structure and a yoke according to an embodiment of the disclosure;
FIG. 16 is a cross-sectional view illustrating a camera module according to an embodiment of the disclosure;
FIG. 17 is a perspective view illustrating a wearable electronic device according to an embodiment of the disclosure;
FIG. 18 is a perspective view illustrating a wearable electronic device according to an embodiment of the disclosure; and
FIG. 19 is a front view illustrating a wearable electronic device according to an embodiment of the disclosure.

### [Mode for the Invention]

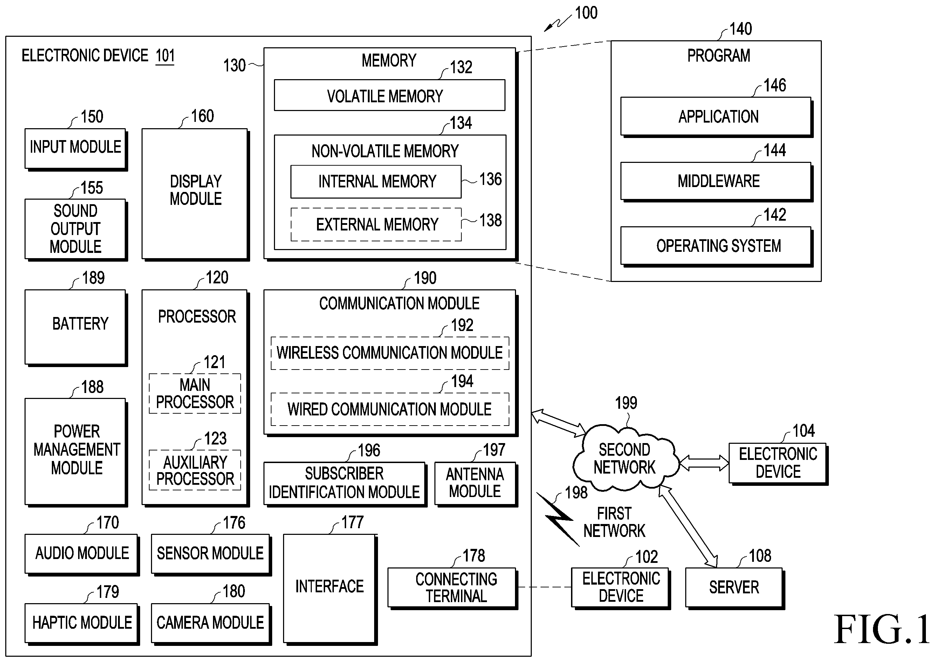

FIG. 1 is a block diagram illustrating an electronic device in a network environment 100 according to various embodiments of the disclosure.

Referring to FIG. 1, the electronic device 101 in the network environment 100 may communicate with an external electronic device 102 via a first network 198 (e.g., a short-range wireless communication network), or an external electronic device 104 or a server 108 via a second network 199 (e.g., a long-range wireless communication network). According to an embodiment, the electronic device 101 may communicate with the external electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. In an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display module 160 may include a touch sensor configured to detect a touch, or a second sensor module configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the external electronic device 102). According to an embodiment, the connecting terminal 178 may include, for example, a HDMI connector, a USB connector, a SD card connector, or an audio connector (e.g., a headphone connector).\

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the external electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments of the disclosure may be one of various types of devices. The electronic devices may include, for example, a portable communication device (e.g., a smartphone), a computer device, a portable multimedia device, a portable medical device, a camera, a wearable device, or a home appliance. The electronic devices according to an embodiment are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

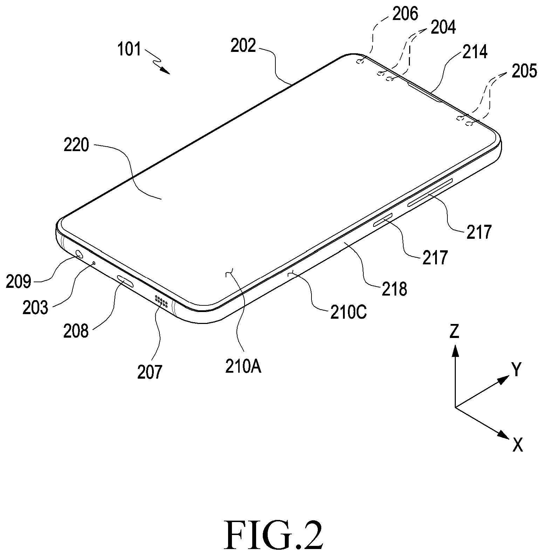

FIG. 2 is a perspective view illustrating a front surface of an electronic device according to an embodiment of the disclosure.

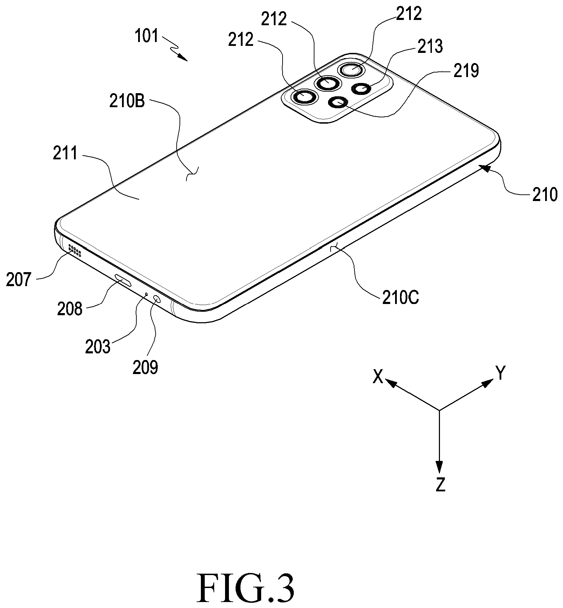

FIG. 3 is a perspective view illustrating a rear surface of an electronic device according to an embodiment of the disclosure.

Hereinafter, for convenience of description of FIGS. 2 to 19, FIGS. 2 to 19 illustrate a spatial coordinate system defined and interpreted as an X-axis, a Y-axis, and a Z-axis that are orthogonal to each other. Hereinafter, for convenience of description, the X-axis direction may be defined and interpreted as the width direction of the camera module, the electronic device, or the components, the Y-axis direction may be defined and interpreted as the length direction of the camera module, the electronic device, or the components, and the Z-axis direction may be defined and interpreted as the height direction (or thickness direction) of the camera module, the electronic device, or the components.

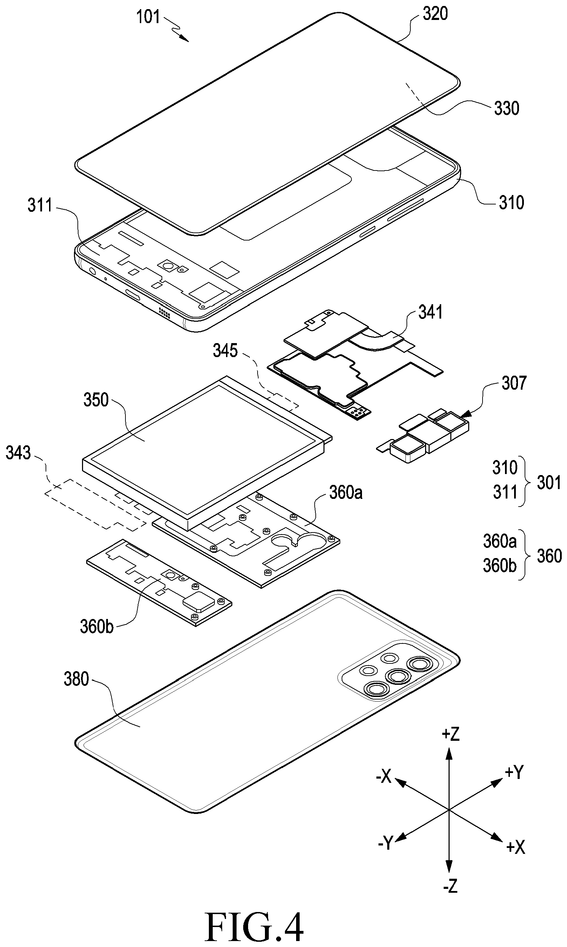

The embodiments of FIGS. 2 to 3 may be combined with the embodiments of FIG. 1 or the embodiments of FIGS. 4 to 19.

Referring to FIGS. 2 to 3, an electronic device 101 (e.g., the electronic device 101 of FIG. 1) according to an embodiment may comprise a housing 210 including a first surface (or a front surface) 210A, a second surface (or a rear surface) 210B, and a side surface 210C surrounding a space defined between the first surface 210A and the second surface 210B. In an embodiment (not shown), the housing 210 may refer to a structure that forms some of the first surface 210A of FIG. 2, the second surface 210B and the side surface 210C of FIG. 3. According to an embodiment, at least a portion of the first surface 210A may be formed by a substantially transparent front plate 202 (e.g., a glass plate or a polymer plate including various coating layers). The second surface 210B may be formed by a substantially opaque rear plate 211. The rear plate 211 may be formed of, for example, coated or colored glass, ceramic, a polymer, or a metal (e.g., aluminum, stainless steel (STS), or magnesium), or a combination of two or more of these materials. The side surface 210C may be formed by a side structure (or a side bezel structure) 218 coupled to the front plate 202 and the rear plate 211 and including a metal and/or a polymer. **In** an embodiment, the rear plate 211 and the side structure 218 may be integrally formed, and include the same material (e.g., a metal material such as aluminum).

Although not shown, the front plate 202 may include area(s) that bend from at least a portion of an edge toward the rear plate 211 and seamlessly extend. **In an** embodiment, only one of the areas of the front plate 202 (or the rear plate 211), which bend to the rear plate 211 (or front plate 202) and extend may be included in one edge of the first surface 210A. According to an embodiment, the front plate 202 or the rear plate 211 may have a substantially flat plate shape. For example, no bent and extended area may be included. When an area bending and extending is included, the thickness of the electronic device 101 at the portion including the area bending and extending may be smaller than the thickness of the rest.

According to an embodiment, the electronic device 101 may include at least one or more of a display 220, audio modules 203, 207, and 214, sensor modules 204, and 219, camera modules 205, 212, and 213, a key input device 217, a light-emitting element 206, and connector holes 208 and 209. **In** an embodiment, at least one of the components (e.g., the key input device 217 or the light-emitting element 206) may be omitted from the electronic device 101, or the electronic device 101 may additionally include other components.

The display 220 may be visually exposed, for example, through a large portion of the front plate 202. **In** an embodiment, at least a portion of the display 220 may be visually exposed through the front plate 202 forming the first surface 210A, or through a portion of the side surface 210C. **In** an embodiment, the edge of the display 220 may be formed to be substantially the same in shape as an adjacent outer edge of the front plate 202. **In** an embodiment (not shown), the interval between the outer edge of the display 220 and the outer edge of the front plate 202 may remain substantially even to give a larger area of visual exposure of the display 220.

In an embodiment (not shown), the screen display area of the display 220 may form a recess or an opening in a portion thereof, and may include at least one or more of the audio module 214, the sensor module 204, the camera module 205, and the light-emitting element 206, which are aligned with the recess or the opening. **In an** embodiment (not shown), at least one or more of the audio module 214, the sensor module 204, the camera module 205, the fingerprint sensor (not shown), and the light-emitting element 206 may be included on the rear surface of the screen display area of the display 220. **In** an embodiment (not shown), the display 220 may be coupled to or disposed adjacent to a touch-sensing circuit, a pressure sensor capable of measuring the intensity of the touch (pressure), and/or a digitizer detecting a magnetic field type stylus pen. **In** an embodiment, at least part of the sensor modules 204, and 219 may be disposed on the second surface 210B and/or the side surface 210C. **In** an embodiment, at least a portion of the key input device 217 may be disposed on the second surface 210B, or may be disposed on the first surface 210A (or the display 220) in the form of a soft key.

The audio modules 203, 207, and 214 may include, for example, a microphone hole 203 and speaker holes 207 and 214. The microphone hole 203 may include a microphone disposed therein so as to acquire external sound, and in an embodiment, a plurality of microphones may be disposed therein to be able to detect the direction of a sound. The speaker holes 207 and 214 may include an external speaker hole 207 and a phone call receiver hole 214. In an embodiment, the speaker holes 207 and 214 and the microphone hole 203 are implemented as a single hole, or a speaker may be included without the speaker holes 207 and 214 (e.g., a piezo speaker).

The sensor modules 204, and 219 may generate an electrical signal or a data value corresponding to, for example, an internal operating state or external environmental state of the electronic device 101. The sensor modules 204, and 219 may include, for example, a first sensor module 204 (e.g., a proximity sensor) and/or a second sensor module (not shown) (e.g., a fingerprint sensor) which are disposed on the first surface 210A of the housing 210, and/or a third sensor module 219 (e.g., an HRM sensor), and/or a fourth sensor module (e.g., a fingerprint sensor) which are disposed on the second surface 210B of the housing 210. The fingerprint sensor may be disposed not only on the first surface 210A (e.g., the display 220) of the housing 210, but also on the second surface 210B or the side surface 210C. The electronic device 101 may further include at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, and an illuminance sensor.

The camera modules 205, 212, and 213 may include, for example, a first camera module 205 disposed on the first surface 210A of the electronic device 101, and a second camera module 212 and/or a flash 213 disposed on the second surface 210B. The camera modules 205 and 212 may include one or more lenses, an image sensor, and/or an image signal processor. The flash 213 may include, for example, a light-emitting diode or a xenon lamp. In an embodiment, two or more lenses (e.g., an infrared camera lens, a wide-angle lens, and a telephoto lens) and image sensors may be disposed on one surface of the electronic device 101. In an embodiment, flash 213 may emit infrared light. The infrared light emitted by the flash 213 and reflected by the subject may be received through the third sensor module 219. The electronic device 101 or the processor of the electronic device 101 may detect depth information about the subject based on the time point when the infrared light is received from the third sensor module 219.

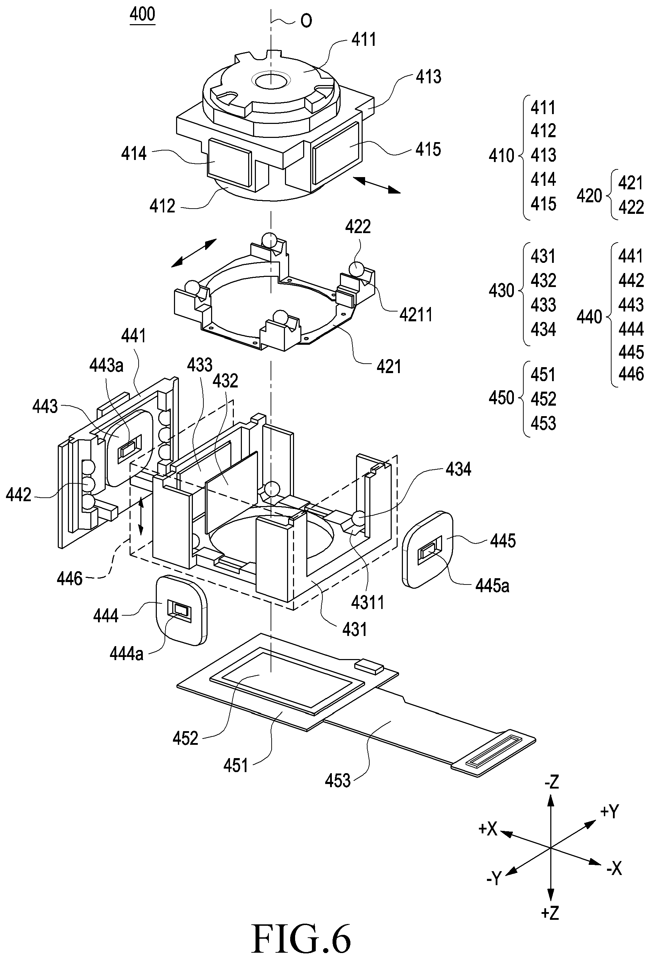

According to an embodiment, the second camera module 212 may perform a hand shake correction function (e.g., an optical image stabilization (OIS) function). For example, the second camera module 212 may move the optical axis direction (e.g., the optical axis direction O of FIG. 6) of the second camera module 212 in a direction (e.g., the X-axis direction or the Y-axis direction of FIG. 6) substantially perpendicular to the optical axis direction in order to prevent or limit image quality from deteriorating due to shaking of the electronic device 101. By adjusting the optical axis direction of the second camera module 212, the electronic device 101 may correct the shaking of the second camera module 212.

According to an embodiment, the second camera module 212 may perform a focus adjustment function (e.g., an auto focus (AF) function). For example, in order to provide a focus adjustment function, the second camera module 212 may move a lens assembly (e.g., the lens assembly 410 of FIG. 6) of the second camera module 212 in an optical axis direction (e.g., the optical axis direction O of FIG. 6). As the lens assembly of the second camera module 212 is moved, the electronic device 101 may adjust the focal length of the second camera module 212.

The key input device 217 may be disposed on the side surface 210C of the housing 210. In an embodiment, the electronic device 101 may not include some or all of the above-mentioned key input device 217, and the key input device 217, which is not included therein, may be implemented in another form such as a soft key on the display 220. In an embodiment, the key input device may include a sensor module disposed on the second surface 210B of the housing 210.

The light-emitting element 206 may be disposed on, for example, the first surface 210A of the housing 210. The light-emitting element 206 may provide, for example, state information of the electronic device 101 in the form of light. In an embodiment, the light-emitting element 206 may provide a light source that interacts with, for example, the operation of the camera module 205. The light-emitting element 206 may include, for example, an LED, an IR LED, and a xenon lamp.

The connector holes 208 and 209 may include, for example, a first connector hole 208 capable of accommodating a connector (e.g., a USB connector) for transmitting/receiving power and/or data to/from an external electronic device, and/or a second connector hole 209 (e.g., an earphone jack) capable of accommodating a connector for transmitting/receiving an audio signal to/from an external electronic device.

FIG. 4 is an exploded perspective view illustrating a front surface of an electronic device according to an embodiment of the disclosure.

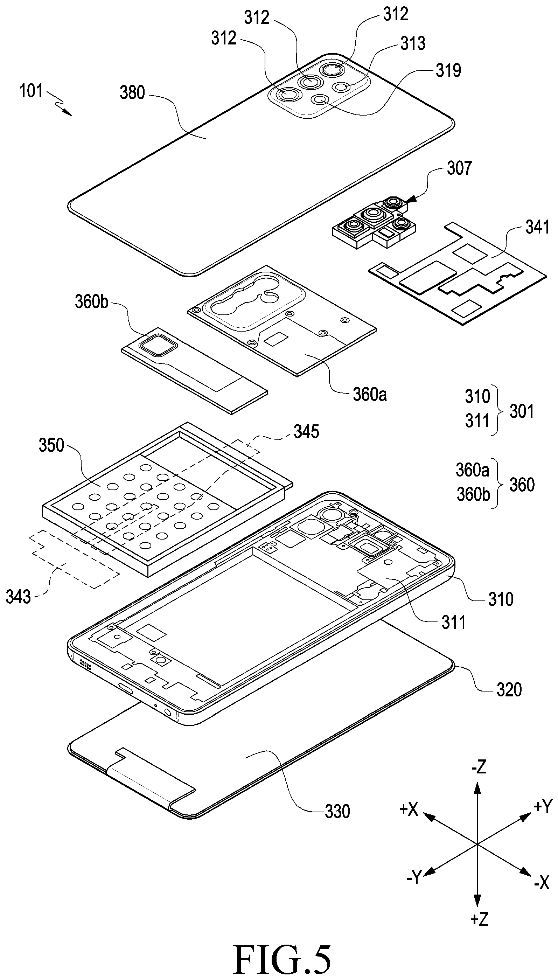

FIG. 5 is an exploded perspective view illustrating a rear surface of an electronic device according to an embodiment.

The embodiments of FIGS. 4 to 5 may be combined with the embodiments of FIGS. 1 to 3 or the embodiments of FIGS. 6 to 19.

Referring to FIGS. 3 and 4, an electronic device 101 (e.g., the electronic device 101 of FIG. 1 or 2) may include a side structure 310, a first support member 311 (e.g., a bracket), a front plate 320 (e.g., the front plate 202 of FIG. 2), a display 330 (e.g., the display 220 of FIG. 2), at least one printed circuit board (or board assembly) 341 and 343, a battery 350, a second support member 360 (e.g., a rear case), an antenna, a camera assembly 307, and a rear plate 380 (e.g., the rear plate 211 of FIG. 3). When the electronic device 101 includes the plurality of printed circuit boards 341 and 343, the electronic device 101 may include at least one flexible printed circuit board 345 to electrically connect different printed circuit boards. For example, the printed circuit boards 341 and 343 may include a first circuit board 341 disposed above the battery 350 (e.g., in the +Y-axis direction) and a second circuit board 343 disposed below the battery 350 (e.g., in the -Y-axis direction), and a flexible printed circuit board 345 may electrically connect the first circuit board 341 and the second circuit board 343.

According to an embodiment, the electronic device 101 may exclude at least one (e.g., the first support member 311 or the second support member 360) of the components or may further include other components. At least one of the components of the electronic device 101 may be the same as or similar to at least one of those of the electronic device 101 of FIGS. 1 to 3, and redundant descriptions will be omitted below.

According to an embodiment, at least a portion of the first support member 311 may be provided in a flat plate shape. In an embodiment, the first support member 311 may be disposed inside the electronic device 101 to be connected to the side structure 310, or integrated with the side structure 310. The first support member 311 may be formed of, for example, a metal and/or nonmetal (e.g., polymer) material. When the first support member 311 is at least partially formed of a metal material, a portion of the side structure 310 or the first support member 311 may function as an antenna. The display 330 may be joined onto one surface of the first support member 311, and the printed circuit boards 341 and 343 may be joined onto the other surface of the first support member 311. A processor, a memory, and/or an interface may be mounted on the printed circuit boards 341 and 343. The processor may include one or more of, e.g., a central processing unit, an application processor, a graphic processing unit, an image signal processor, a sensor hub processor, or a communication processor.

According to an embodiment, the first support member 311 and the side structure 310 may be collectively referred to as a front case or a housing 301. According to an embodiment, the housing 301 may be generally understood as a structure for receiving, protecting, or disposing the printed circuit boards 341 and 343 or the battery 350. In an embodiment, the housing 301 may be understood to include a structure that the user may visually or tactilely recognize from the exterior of the electronic device 101, e.g., the side structure 310, the front plate 320, and/or the rear plate 380. In an embodiment, the term 'front surface or rear surface of the housing 301' may refer to the first surface 210A of FIG. 2 or the second surface 210B of FIG. 3. In an embodiment, the first support member 311 may be disposed between the front plate 320 (e.g., the first surface 210A of FIG. 2) and the rear plate 380 (e.g., the second surface 210B of FIG. 3), and may function as a structure for placing electrical/electronic components, such as the printed circuit board 341 or 343 or the camera assembly 307.

According to an embodiment, the memory may include, e.g., a volatile or non-volatile memory.

According to an embodiment, the interface may include, e.g., a high-definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector.

According to an embodiment, the second support member 360 may include, e.g., an upper support member 360a and a lower support member 360b. In an embodiment, the upper support member 360a, together with a portion of the first support member 311, may be disposed to surround a printed circuit board (e.g., the first circuit board 341). For example, the upper support member 360a of the second support member 360 may be disposed to face the first support member 311 with the first circuit board 341 interposed therebetween. In an embodiment, the lower support member 360b of the second support member 360 may be disposed to face the first support member 311 with the second circuit board 343 interposed therebetween. A circuit device (e.g., a processor, a communication module, or a memory) implemented in the form of an integrated circuit chip or various electrical/electronic components may be disposed on the printed circuit boards 341 and 343. According to an embodiment, the printed circuit boards 341 and 343 may receive an electromagnetic shielding environment from the second support member 360. In an embodiment, the lower support member 360b may be utilized as a structure in which electrical/electronic components such as a speaker module and an interface (e.g., a USB connector, an SD card/MMC connector, or an audio connector) may be disposed. In an embodiment, electrical/electronic components, such as a speaker module and an interface (e.g., a USB connector, an SD card/MMC connector, or an audio connector) may be disposed on an additional printed circuit board (not shown). For example, the lower support member 360b, together with the other portion of the first support member 311, may be disposed to surround the additional printed circuit board. The speaker module or interface disposed on the additional printed circuit board (not shown) or the lower support member 360b may be disposed to correspond to the audio module 207 or the connector holes 208 and 209 of FIG. 2.

According to an embodiment, the battery 350 may be a device for supplying power to at least one component of the electronic device 101. The battery 350 may include, e.g., a primary cell which is not rechargeable, a secondary cell which is rechargeable, or a fuel cell. At least a portion of the battery 350, for example, may be disposed on substantially the same plane as the printed circuit boards 341 and 343. The battery 350 may be integrally or detachably disposed inside the electronic device 101.

Although not shown, the antenna may include a conductor pattern implemented on the surface of the second support member 360 through, e.g., a laser direct structuring. In an embodiment, the antenna may include a printed circuit pattern formed on the surface of the thin film, and the thin film-type antenna may be disposed between the rear plate 380 and the battery 350. The antenna may include, e.g., a near field communication (NFC) antenna, a wireless charging antenna, and/or a magnetic secure transmission (MST) antenna. The antenna may perform short-range communication with, e.g., an external device or may wirelessly transmit and receive power required for charging. In an embodiment, another antenna structure may be formed by a portion or combination of the side structure 310 and/or the first support member 311.

According to an embodiment, the camera assembly 307 may include at least one camera module. Inside the electronic device 101, the camera assembly 307 (or at least one camera module) may receive at least a portion of light incident through the optical hole or the camera window 312, 313, and 319. In an embodiment, the camera assembly 307 may be disposed on the first support member 311 in a position adjacent to the printed circuit boards 341 and 343. In an embodiment, the camera module(s) of the camera assembly 307 may be generally aligned with any one of the camera windows 312, 313, and 319, and may be at least partially surrounded by the second support member 360 (e.g., the upper support member 360a).

FIG. 6 is a perspective view illustrating a camera module according to an embodiment of the disclosure.

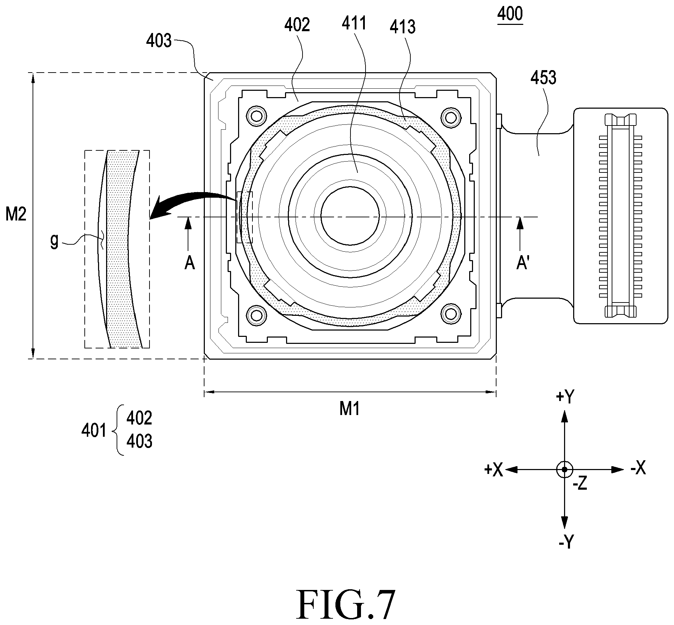

FIG. 7 is a plan view illustrating a camera module according to an embodiment of the disclosure.

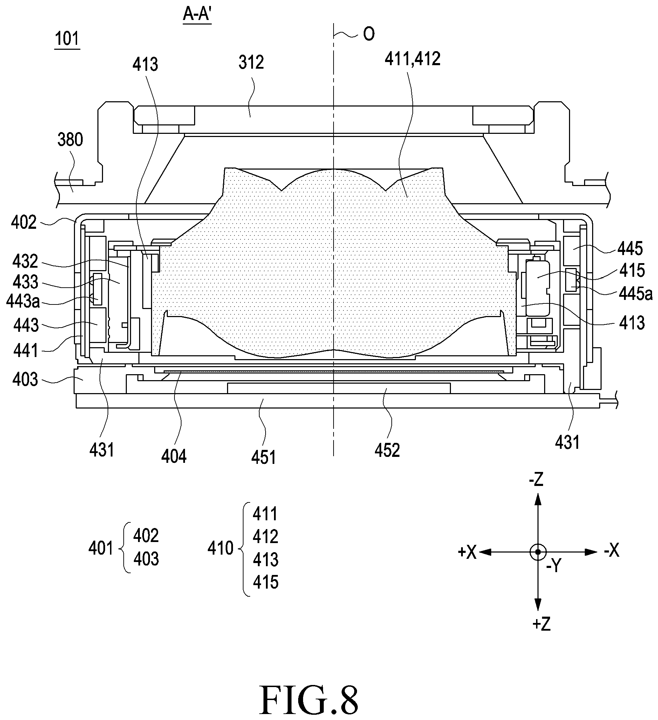

FIG. 8 is a cross-sectional view of FIG. 7, taken along line A-A'.

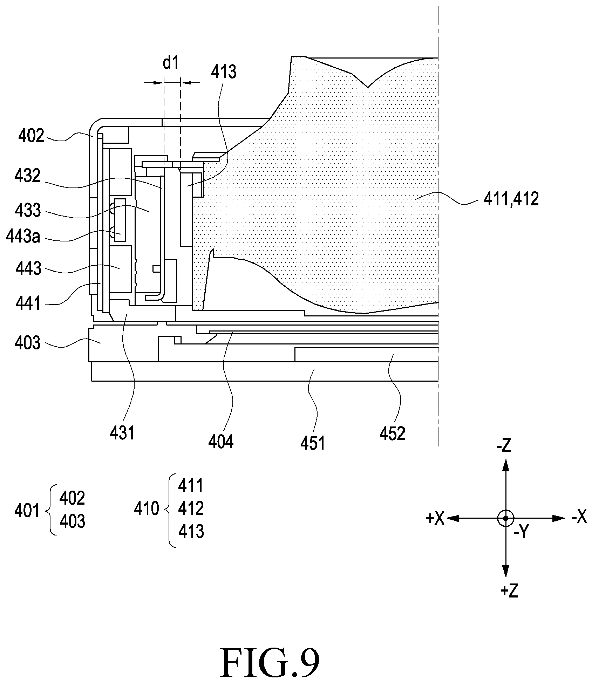

FIG. 9 is a cross-sectional view illustrating a camera module according to an embodiment of the disclosure.

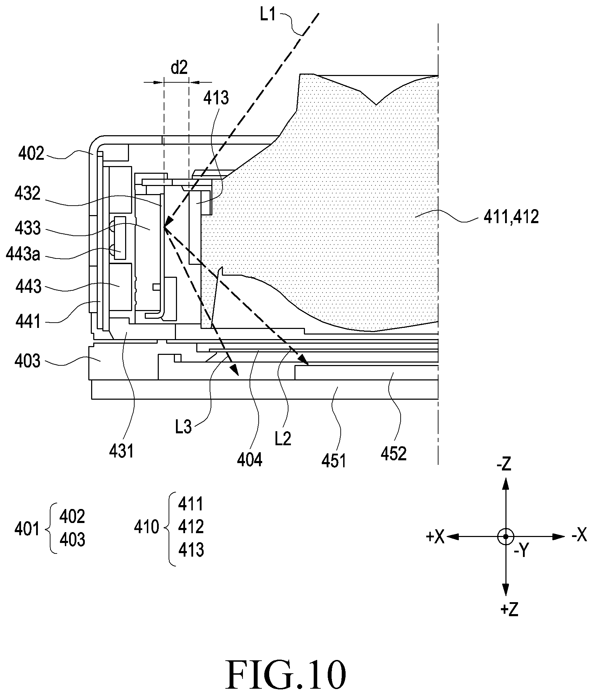

FIG. 10 is a cross-sectional view illustrating a camera module according to an embodiment of the disclosure.

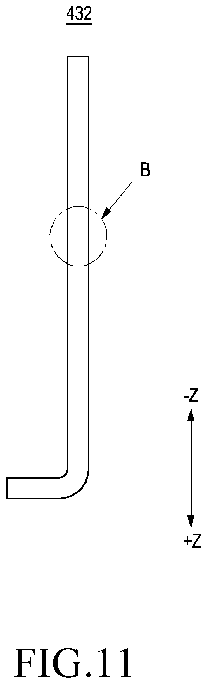

The embodiments of FIGS. 6 to 10 may be combined with the embodiments of FIGS. 1 to 5, or the embodiments of FIGS. 11 to 19.

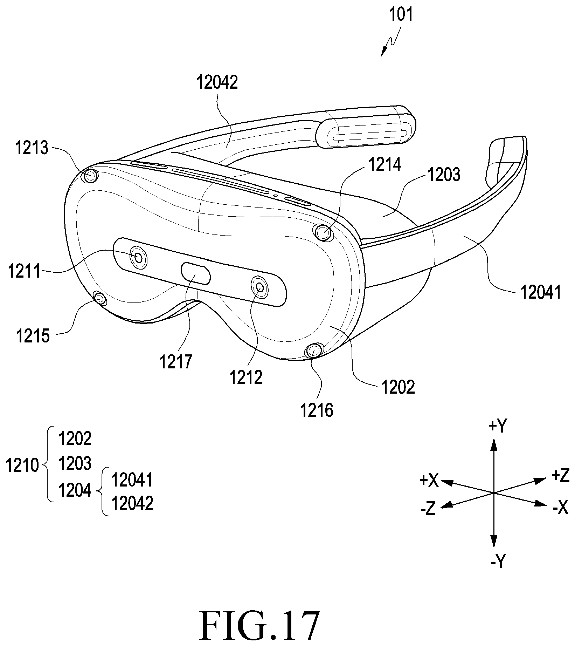

Referring to FIGS. 6 to 8, an electronic device (e.g., the electronic device 101 of FIGS. 1 to 5 or the electronic device 101 of FIGS. 17 to 19) may include a camera module 400 (e.g., at least one of camera modules included in the camera assembly 307 of FIGS. 4 to 5, or at least one of VST camera modules 1211 and 1212 of FIGS. 17 to 19).

According to an embodiment, the camera module 400 may include a lens assembly 410, a middle guide assembly 420, an auto focus assembly (AF) assembly 430, a coil assembly 440, or a board assembly 450.

According to an embodiment, the lens assembly 410 may include a lens unit 411, a lens unit housing 412, an optical image stabilization carrier (OIS carrier) 413, or at least one OIS magnet 414 or 415. The lens unit housing 412 may accommodate the lens unit 411. The lens unit housing 412 may be a barrel housing which may be defined and/or referred to as a barrel that accommodates the lens unit 411.

According to an embodiment, at least one camera lens may be disposed inside the lens unit 411. According to an embodiment, at least a portion of the lens unit 411 may be placed within or received in the lens unit housing 412. According to an embodiment, the lens unit 411 and the lens unit housing 412 may either be formed as separate members and assembled, or may be integrated with each other. The lens unit 411 may be defined and/or referred to as a lens carrier that supports or accommodates at least one camera lens.

According to an embodiment, the lens unit 411 may include at least one lens. In addition, the lens unit 411 may guide or focus light incident along the optical axis O direction onto an image sensor 452.

According to an embodiment, through the hand shake correction operation of the OIS carrier 413 or the coil assembly 440, the lens assembly 410 or the lens unit 411 may move relative to the image sensor 452 on a plane (e.g., a plane including the X and Y axes of FIGS. 6 to 10) that is substantially perpendicular to the direction of the optical axis O. By the hand shake correction operation, the OIS carrier 413 may be moved on a plane substantially perpendicular to the direction of the optical axis O, and the lens unit 411 and/or the lens assembly 410 coupled to the OIS carrier 413 may be moved on a plane that is substantially perpendicular to the direction of the optical axis O, together with the OIS carrier 413.

According to an embodiment, the lens assembly 410 or the lens unit 411 may move along the optical axis O through the focus adjustment operation of the AF carrier 431 or the coil assembly 440. As a result of the focus adjustment operation, the AF carrier 413 may be moved along the direction of the optical axis O, and the lens assembly 410 and/or the lens unit 411 may be moved along with the AF carrier 413 in the direction of the optical axis O.

According to an embodiment, at least a portion of the lens unit 411 may be disposed inside the lens unit housing 412. For example, the lens unit housing 412 may accommodate at least a portion of the lens unit 411. The lens unit housing 412 may be defined as a support member that supports the lens unit 411.

According to an embodiment, at least a portion of the lens unit 411 may be disposed inside the lens unit housing 412. The lens unit housing 412 may be formed, for example, in an overall cylindrical shape, but is not limited thereto. According to an embodiment, the lens unit housing 412 may be formed of a metal and/or nonmetal material. The outer surface of the lens unit housing 412 may be coated with a nonmetal material to prevent diffuse light reflection.

According to an embodiment, the lens unit housing 412 and/or the lens unit 411 accommodated in the lens unit housing 412 may be mounted on the OIS carrier 413. According to an embodiment, the lens unit housing 412 and/or the lens unit 411 may be fixed to the OIS carrier 413.

According to an embodiment, the OIS carrier 413 may be moved on a plane substantially perpendicular to the direction of the optical axis O by means of at least one OIS magnet 414 or 415 and at least one OIS coil 444 or 445. For example, the at least one OIS coil 444 or 445 may be configured to generate an electromagnetic force by applying an electrical signal. The electromagnetic force generated by the at least one OIS coil 444 or 445 may interact with the at least one OIS magnet 414 or 415 to generate a driving force for moving the OIS carrier 413 or a middle guide assembly 420, coupled to the at least one OIS magnet 414 or 415.

According to an embodiment, the at least one OIS magnet 414 or 415 may include a first OIS magnet 414 disposed on at least a portion of the OIS carrier 413 and a second OIS magnet 415 disposed to face a different direction from the direction of the first OIS magnet 414. For example, a direction (e.g., the X-axis direction of FIG. 6) in which one surface of the second OIS magnet 415 faces may be a direction substantially perpendicular or orthogonal to a direction (e.g., the Y-axis direction of FIG. 6) in which one surface of the first OIS magnet 414 faces.

According to an embodiment, the first OIS magnet 414 may be defined and/or referred to as a first OIS magnetic body. The second OIS magnet 415 may be defined and/or referred to as a second OIS magnetic body.

According to an embodiment, the first OIS magnet 414 may face the first OIS coil 444, and the second OIS magnet 415 may face the second OIS coil 445. The first OIS magnet 414 and the second OIS magnet 415 may be fixed to the OIS carrier 413.

According to an embodiment, the first OIS magnet 414 may interact with the first OIS coil 444 to generate a driving force for moving the OIS carrier 413, the lens unit 411, or the middle guide assembly 420 in a first OIS direction (e.g., the Y-axis direction of FIGS. 6 to 10) that is substantially perpendicular to the optical axis O direction.

According to an embodiment, the second OIS magnet 415 may interact with the second OIS coil 445 to generate a driving force for moving the OIS carrier 413 and the lens unit 411 in a second OIS direction (e.g., the X-axis direction of FIGS. 6 to 10) that is substantially perpendicular to the optical axis O direction and the first OIS direction.

According to an embodiment, the OIS carrier 413 may be disposed in the middle guide assembly 420. The OIS carrier 413 may be moved in a first OIS direction (e.g., the Y-axis direction of FIGS. 6 to 10) along with the middle guide 421, or in a second OIS direction (e.g., the X-axis direction of FIGS. 6 to 10) relative to the middle guide 421.

According to an embodiment, the middle guide assembly 420 may include a middle guide 421 or at least one first rolling ball 422. At least a portion of the lens unit 411 may be disposed in the middle guide assembly 410.

According to an embodiment, the middle guide 421 may be disposed in the AF carrier 431.

According to an embodiment, the middle guide 421 may support the lens assembly 410 (e.g., at least a portion of the lens assembly 410). At least a portion (e.g., the OIS carrier 413) of the lens assembly 410 may be seated within the middle guide 421. For example, at least a portion (e.g., the OIS carrier 413) of the lens assembly 410 may be seated on the first rolling ball 422 disposed in the first guide recess 4211 of the middle guide 421. For example, the OIS carrier 413 may be supported by the first rolling ball 422.

According to an embodiment, when a driving force is applied to move the OIS carrier 413 in the first OIS direction (e.g., the Y-axis direction of FIGS. 6 to 10), the middle guide 421 may move in the first OIS direction together with the OIS carrier 413. For example, when the OIS carrier 413 is moved in the first OIS direction, at least a portion of the OIS carrier 413 in which the second OIS magnet 415 is positioned may press at least a portion of the middle guide 421 so that the middle guide 421 may be moved together in the first OIS direction.

According to an embodiment, when a driving force is applied to move the OIS carrier 413 in the second OIS direction (e.g., the X-axis direction of FIGS. 6 to 10), the middle guide 421 may not move together in the second OIS direction. For example, when the OIS carrier 413 is moved in the second OIS direction, the OIS carrier 413 may be moved in the second OIS direction relative to the middle guide 421. According to an embodiment, the middle guide 421 may include a first guide recess 4211, in which at least one first rolling ball 422 may be disposed. When the OIS carrier 413 moves relative to the middle guide 421, the at least one first rolling ball 422 may assist the movement of the OIS carrier 413, ensuring its smooth movement.

According to an embodiment, the AF assembly 430 may include an AF carrier 431, at least one yoke 432, at least one AF magnet 433, or at least one second rolling ball 434. At least a portion of the middle guide assembly 420 and/or at least a portion of the lens assembly 410 may be disposed in the AF assembly 430.

According to an embodiment, the AF carrier 431 may support the middle guide assembly 420 (e.g., a lower portion of the middle guide assembly 420). At least a portion (e.g., the middle guide 421) of the middle guide assembly 420 may be seated inside the AF carrier 431. For example, at least a portion (e.g., the middle guide 421) of the middle guide assembly 420 may be seated on the second rolling ball 434 disposed in the second guide recess 4311 of the AF carrier 431. For example, the middle guide 421 may be supported by the second rolling ball 434.

According to an embodiment, the AF carrier 431 may be moved in the optical axis O direction (e.g., the Z-axis direction of FIGS. 6 to 10) relative to the board assembly 450 or the coil assembly 440.

According to an embodiment, the AF carrier 431 may be moved in the optical axis O direction by the at least one AF magnet 433 and the at least one AF coil 443. For example, the at least one AF coil 443 may be configured to generate an electromagnetic force by applying an electrical signal. The electromagnetic force generated by the at least one AF coil 443 may interact with the at least one AF magnet 433 to generate a driving force for moving the AF carrier 431 coupled with the at least one AF magnet 433.

According to an embodiment, the AF magnet 433 may interact with the AF coil 443 to generate a driving force for moving the AF carrier 431 and the lens assembly 410 in the direction of the optical axis O.

According to an embodiment, the AF magnet 433 may be defined and/or referred to as an AF magnetic body.

According to an embodiment, when the AF carrier 431 is moved in the optical axis O direction relative to the board assembly 450, the coil assembly 440, or a casing (e.g., the casings 402 and 403 of FIGS. 7 to 8), the middle guide 421 supported by the AF carrier 431 may be moved together in the optical axis O direction. Also, the lens assembly 410 supported by the middle guide 421 may be moved together in the optical axis O direction.

According to an embodiment, the AF carrier 431 may include a second guide recess 4311, in which at least one second rolling ball 434 may be disposed. When the middle guide 421 moves in the first OIS direction (e.g., the Y-axis direction of FIGS. 6 to 10) relative to the AF carrier 431, the at least one second rolling ball 434 may assist the movement of the middle guide 421, ensuring smooth movement of the middle guide 421.

According to an embodiment, at least one AF magnet 433 may be disposed on the AF carrier 431. According to an embodiment, the at least one AF magnet 433 may face the AF coil 443.

According to an embodiment, one surface (e.g., a surface facing the -X direction in FIGS. 6 to 10) of the at least one AF magnet 433 may be covered by the at least one yoke 432.

According to an embodiment, the AF carrier 431 may be formed of a nonmetal material. The at least one yoke 432 may be formed of a metal material (e.g., iron, a steel plate cold commercial (SPCC), nickel, or stainless steel). The at least one yoke 432 may be fixed to the AF carrier 431.

According to an embodiment, the at least one yoke 432 formed of a metal material, may enhance the coupling force between the at least one AF magnet 433 and the AF carrier 431. For example, even when an external impact is applied to the camera module 400 due to the magnetic force generated by the at least one AF magnet 433 and the at least one yoke 432, detachment of the at least one magnet 433 from the AF carrier 431 may be prevented or limited.

According to an embodiment, the at least one yoke 432 may confine a magnetic force (or magnetic field) generated by the at least one AF magnet 433 between the at least one yoke 432 and the cover 441. For example, the at least one yoke 432 may confine a magnetic flux density generated from the at least one AF magnet 433 between the at least one yoke 432 and the cover 441, or may concentrate the magnetic flux density generated from the at least one AF magnet 433 between the at least one yoke 432 and the cover 441. The at least one yoke 432 may block or prevent a magnetic force (or magnetic field) generated from the at least one AF magnet 433 from leaking to the lens assembly 410 side (e.g., the lens unit housing 412 side). For example, the at least one yoke 432 may concentrate the magnetic force generated by the at least one AF magnet 433 toward the at least one AF coil 443. For example, the direction of the magnetic flux generated by the at least one AF magnet 433 may be adjusted by the at least one yoke 432 to be directed toward the at least one AF coil 443. Accordingly, by concentrating the magnetic force generated from the at least one AF magnet 433 on the at least one AF coil 443, the magnetic efficiency between the at least one AF magnet 433 and the at least one AF coil 443 may be improved. Furthermore, the driving performance of the focus adjustment operation of the camera module 400 may be enhanced.

According to an embodiment, during injection-molding of the AF carrier 431, the at least one AF magnet 433 and/or the at least one yoke 432 may be connected to the AF carrier 431 using insert injection molding. The at least one AF magnet 433 may be coupled to the at least one yoke 432. For example, the at least one AF magnet 433 may be attached to the at least one yoke 432 by the magnetic force generated through the interaction with at least one yoke 432 formed of a metal material (e.g., stainless steel).

According to an embodiment, the at least one yoke 432 may be defined and/or referred to as a metal member, a fixing member, or a magnetic member.

According to an embodiment, the shape of the yoke 432 may be determined or designed to correspond to the AF carrier 431or the at least one AF magnet 433.

According to an embodiment, the coil assembly 440 may include a cover 441, at least one third rolling ball 442, an AF coil 443, a first OIS coil 444, a second OIS coil 445, or a coil board 446.

According to an embodiment, the coil board 446 may include a flexible printed circuit board (FCPB). The coil board 446 may be disposed to surround the AF assembly 430. For example, the coil board 446 may cover an outer surface of the AF carrier 431. In an embodiment, the coil board 446 may not cover the top surface of the AF carrier 431. The coils 443, 444, and 445 and the hall sensors 443a, 444a, and 445a of the coil board 446 may be mounted or disposed on the coil board 446. The coil board 446 may be a single FPCB. Although not shown, a plurality of coil boards 446 may be provided.

According to an embodiment, the AF coil 443 may be fixed to the cover 441. Additionally, the cover 441 may be disposed on the outer side of the AF carrier 431. Although not shown, the first OIS coil 444 and the second OIS coil 445 may also be fixed by a cover (not shown) in a manner similar to the AF coil 443.

According to an embodiment, at least one third rolling ball 442 may be disposed on the cover 441. When the AF carrier 431 moves in the optical axis O direction relative to the cover 441, the at least one third rolling ball 442 may assist the movement of the AF carrier 431, enabling a smooth movement of the AF carrier 431.

According to an embodiment, the AF coil 443 may be fixed to one surface of the cover 441. The AF coil 443 may face at least one AF magnet 433.

According to an embodiment, the first OIS coil 444 may face the first OIS magnet 414, and the second OIS coil 445 may face the second OIS magnet 415. The second OIS coil 445 and the AF coil 443 may be disposed to face each other. For example, one surface of the second OIS coil 445 may face one surface of the AF coil 443. For example, the second OIS coil 445 may overlap with the AF coil 443 with respect to the second OIS direction (e.g., the X-axis direction of FIG. 6).

According to an embodiment, a hall sensor 443a may be disposed inside the at least one AF coil 443. The hall sensor 443a may detect a relative distance between the at least one AF coil 443 and the at least one AF magnet 433 by detecting the magnetic force of the at least one AF magnet 433. Consequently, it becomes possible to measure the extent to which the AF carrier 431 moves in the optical axis O direction relative to the image sensor 452 within the camera module 400.

According to an embodiment, the hall sensor 444a may be disposed inside the first OIS coil 444. The hall sensor 444a may detect a relative distance between the first OIS coil 444 and the first OIS magnet 414 by detecting the magnetic force of the first OIS magnet 414. Consequently, it becomes possible to measure the extent to which the OIS carrier 413 moves in the first OIS direction (e.g., the Y-axis direction of FIGS. 6 to 10) relative to the image sensor 452 inside the camera module 400. According to an embodiment, the hall sensor 445a may be disposed inside the second OIS coil 445. The hall sensor 445a may detect a relative distance between the second OIS coil 445 and the second OIS magnet 415 by detecting the magnetic force of the second OIS magnet 415. Accordingly, it becomes possible to measure the extent to which the OIS carrier 413 moves in the second OIS direction (e.g., the X-axis direction of FIGS. 6 to 10) relative to the image sensor 452 inside the camera module 400.

According to an embodiment, the processor (e.g., the processor 120 of FIG. 1) of the electronic device (e.g., the electronic device 101 of FIGS. 1 to 5) may receive data (e.g., a magnetic force value) on the strength of the magnetic force detected from the hall sensors 443a, 444a, and 445a. The processor of the electronic device may be configured to determine a relative degree (or distance) of movement of the AF assembly 430 (or the lens assembly 410) in an optical axis O direction, based on the magnetic force value. The processor of the electronic device may be configured to determine a relative degree (or distance) of movement of the lens assembly 410 in a first OIS direction (e.g., the Y-axis direction of FIG. 6) or a second OIS direction (e.g., the X-axis direction of FIG. 6), based on the magnetic force value.

According to an embodiment, the processor of the electronic device may be configured to control the AF coil 443, the first OIS coil 444, or the second OIS coil 445 to provide a hand shake correction operation or a focus adjustment operation of the camera module 400.

According to an embodiment, the camera module 400 may include various sensors for detecting the magnetic force of the magnets 414, 415, and 433 in addition to the hall sensors 443a, 444a, and 445a.

According to an embodiment, the board assembly 450 may include a circuit board 451, an image sensor 452, or a flexible printed circuit board 453.

According to an embodiment, the circuit board 451 may be coupled to a lower portion of the lower casing 403 of the casings 402 and 403. According to an embodiment, the circuit board 451 may be electrically connected to a board assembly (e.g., the board assemblies 341 and 343 of FIGS. 4 to 5) by a flexible printed circuit board 453 (FPCB) connected to the circuit board 451.

According to an embodiment, the image sensor 452 may be disposed on one surface of the circuit board 451. The image sensor may convert light incident through the lens unit 411 into an electrical signal. The image sensor may include either one of a complementary metal-oxide semiconductor (CMOS) and a charge coupled device (CCD), but is not limited thereto and may be provided by various means. The image sensor may be disposed on the same optical axis as the optical axis O of the lens unit 411.

According to an embodiment, the lens unit 411 may be moved in a first OIS movement direction (e.g., the Y-axis direction of FIGS. 6 to 10) relative to the image sensor 452 or may be moved in a second OIS movement direction (e.g., the X-axis direction of FIGS. 6 to 10) relative to the image sensor 452, by the hand shake correction operation of the OIS carrier 413.

According to an embodiment, the lens unit 411 may be moved in the optical axis O direction (e.g., the Z-axis direction of FIGS. 6 to 10) relative to the image sensor 452, by the focus adjustment operation of the AF carrier 431.

According to an embodiment, the plurality of magnets 414, 415, and 433 and the plurality of coils 443, 444, and 445 may be defined and/or referred to as a driving unit.

Referring to FIG. 8, the camera module 400 may include a casing 401. The casing 401 may be defined and/or referred to as a case, a housing, an external member, or an exterior member. The casing 401 may form at least a portion of the exterior of the camera module 400.

According to an embodiment, the casing 401 may include a first casing 402 and a second casing 403 coupled to the first casing 402.

According to an embodiment, the first casing 402 may surround at least a portion of the coil assembly 440 or the lens assembly 410. The first casing 402 may function as an electromagnetic shielding structure. The second casing 403 may provide a structure for mounting the board assembly 450, the coil assembly 440, or the AF assembly 430.

According to an embodiment, the camera module 400 may further include a filter 404 disposed on the upper portion of the second casing 403. The filter 404 may include an infrared filter (IR filter) that filters light collected through the lens unit 411 to a wavelength of a required area band. Although not shown, the first casing 402 may include a stopper that limits a movement distance of the AF carrier 431 in the direction of the optical axis O.

Referring to FIG. 8, a relative position of the camera module 400 within the electronic device 101 is illustrated. For example, the camera module 400 may be disposed on the inner side of the rear plate 380 (e.g., the rear plate 380 of FIGS. 4 to 5) of the electronic device 101, and the lens unit 411 and the lens unit housing 412 may be aligned with the camera window 312 (e.g., the camera window 312 of FIGS. 4 to 5).

Referring to FIG. 7, a state in which the lens unit 411 of the camera module 400 is moved in a second OIS direction (e.g., the X-axis direction of FIG. 7) is illustrated. For example, when the OIS carrier 413 and the lens unit 411 move in a direction (e.g., in the -X axis direction of FIGS. 6 to 10) away from the at least one yoke 432 and the at least one AF magnet 433, a gap (g) may be formed between the first casing 402 and the OIS carrier 413. According to an embodiment, the length M1 of the casing 401 in the second OIS direction (e.g., the X-axis direction of FIG. 7) may be greater than the length of the casing 401 in the first OIS direction (e.g., the Y-axis direction of FIG. 7).

Referring to FIGS. 9 to 10, relative positions of the at least one yoke 432 and the OIS carrier 413 are illustrated. For example, when the at least one yoke 432 and the OIS carrier 413 are relatively close to each other (e.g., FIG. 9), the at least one yoke 432 and the OIS carrier 413 may be spaced apart from each other by a first distance d1. For example, due to the hand shake correction operation, when the lens unit 411 and the OIS carrier 413 move away from the at least one yoke 432 (e.g., FIG. 10), the at least one yoke 432 and the OIS carrier 413 may be spaced apart from each other by a second distance d2 greater than the first distance d1.

When the at least one yoke 432 and the OIS carrier 413 are spaced apart from each other by the second distance d2, the gap (e.g., the gap g of FIG. 7) may be formed between the first casing 402 and the OIS carrier 413 due to a relative position change between the first casing 402 and the lens assembly 410. In this case, an external light L1 may be introduced through the gap g, and at least a portion of the external light L1 may be reflected from at least one yoke 432 formed of a metal material. For example, when at least a portion of the external light L1 is reflected from the at least one yoke 432, the reflected light L2 may be introduced into the image sensor 452. When the light L2 reflected by the image sensor 452 is introduced, noise of the image formed by introducing the lens unit 411 in the optical axis O direction may be generated. For example, due to external lights L1 and L2, noise such as a light leakage phenomenon or a flare may be generated in an image (e.g., a still image or a moving image) generated through the camera module 400.

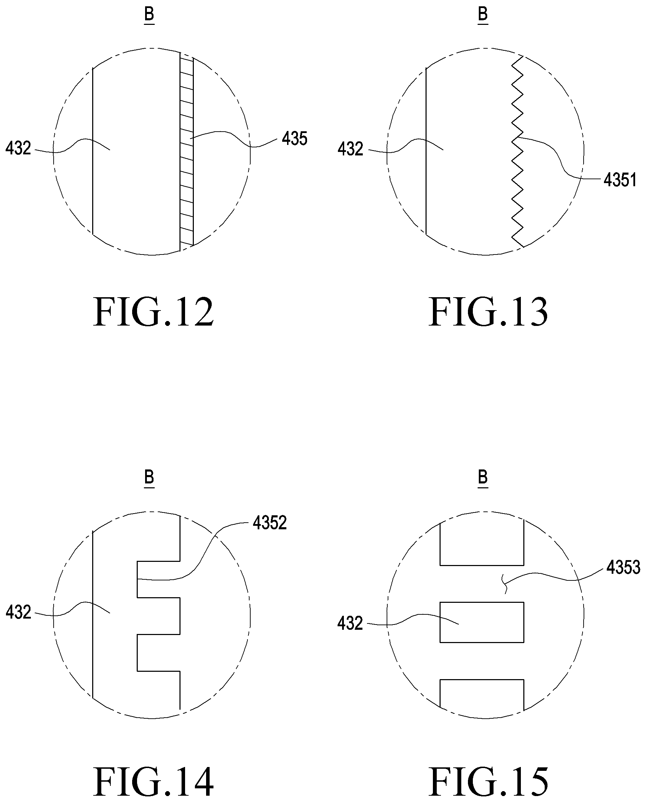

According to an embodiment, the camera module 400 may further include a guide structure (e.g., the guide structures 435, 4351, 4352, and 4353 of FIGS. 12 to 15) formed on one surface (e.g., the surface facing the -X direction of FIGS. 6 to 10) or a portion of one surface of the at least one yoke 432. The guide structure may be formed on at least a portion of one surface of the at least one yoke 432 facing the OIS carrier 413, and may limit a path of the external light L1 such that the external light does not reach the image sensor 452. For example, by the guide structure, the external light L1 may be absorbed by the guide structure formed on at least a portion of one surface of the at least one yoke 432 or may be diffusely reflected by the guide structure, thereby changing the traveling path (e.g., see path L3). The guide structure may be defined and/or referred to as an external light prevention structure, a light reflection obstruction structure, a reflectance alteration structure or a light leakage prevention structure. As described above, since the path of the external light is changed by the guide structure, noise such as light leakage or flare is not generated or minimized in the image sensor 452, and thus the quality of the image generated by the camera module 400 may be improved.

FIG. 11 is a cross-sectional view illustrating a yoke according to an embodiment of the disclosure.

FIG. 12 is a cross-sectional view illustrating a guide structure and a yoke according to an embodiment of the disclosure. FIG. 12 is an enlarged view of part B of FIG. 11.

FIG. 13 is a cross-sectional view illustrating a guide structure and a yoke according to an embodiment of the disclosure. FIG. 13 is an enlarged view of part B of FIG. 11.

FIG. 14 is a cross-sectional view illustrating a guide structure and a yoke according to an embodiment of the disclosure. FIG. 14 is an enlarged view of part B of FIG. 11.

FIG. 15 is a cross-sectional view illustrating a guide structure and a yoke according to an embodiment of the disclosure. FIG. 15 is an enlarged view of part B of FIG. 11.

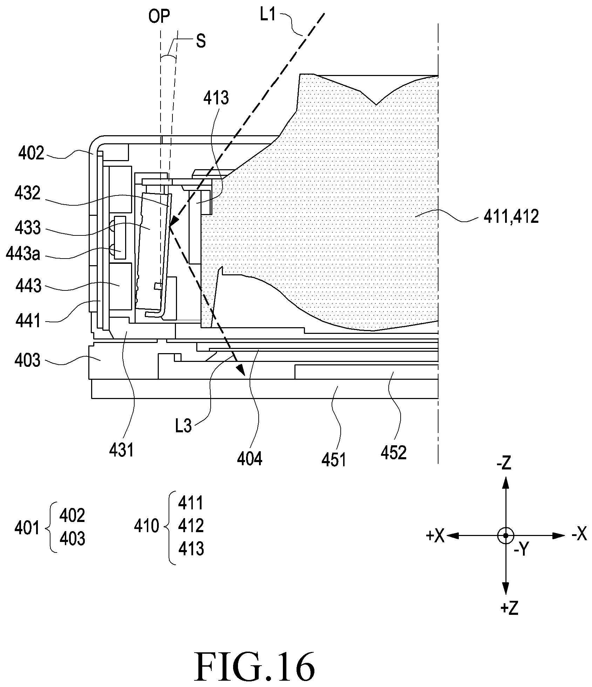

The embodiments of FIGS. 11 to 15 may be combined with the embodiments of FIGS. 1 to 10, or the embodiments of FIGS. 16 to 19.

The configuration of the at least one yoke 432 of FIGS. 11 to 15 may be partially or entirely the same as the configuration of the at least one yoke 432 of FIGS. 6 to 10.

Referring to FIGS. 11 to 15, guide structures 435, 4351, 4352, and 4353 may be formed on one surface (e.g., a surface facing the -X axis direction of FIGS. 6 to 10) of the at least one yoke 432. The guide structure 435, 4351, 4352, and 4353 may be formed on one surface of the yoke 432 facing the OIS carrier 413.

According to an embodiment, the guide structure 435, 4351, 4352, and 4353 formed on one surface of the at least one yoke 432 may face the lens assembly (e.g., the lens assembly 410 of FIGS. 6 to 10).

According to an embodiment, the guide structures 435, 4351, 4352, and 4353 may be formed in at least a partial area of one surface (e.g., a surface facing the -X axis direction of FIGS. 6 to 10) of the at least one yoke 432. For example, the guide structures 435, 4351, 4352, and 4353 may be formed in at least a portion between the upper end and the central portion of one surface of the yoke 432, with the central portion being a portion in the center between an upper end (e.g., an end facing the -Z direction in FIG. 11) and a lower end (e.g., an end facing the +Z direction in FIG. 11) of the one surface of the at least one yoke 432. However, the positions of the guide structures 435, 4351, 4352, and 4353 are not limited thereto, and may be variously designed according to the structure of the camera module (e.g., the camera module 400 of FIGS. 6 to 10), the incident angle of the external light with respect to the at least one yoke 432, or the reflection angle of the external light with respect to the at least one yoke 432. The guide structures 435, 4351, 4352, and 4353 may be formed on the entire area of the one surface of the at least one yoke 432.

Referring to FIG. 12, the guide structure 435 may include a coating layer 435 formed or stacked on one surface of at least one yoke 432.

According to an embodiment, the coating layer 435 may be formed by applying a light absorbent or substantially black (or low brightness) dye or pigment to one surface of the at least one yoke 432.

According to an embodiment, the coating layer 435 may fully or at least partially absorb an external light so as to limit, prevent, decrease and/or degrade external light reflections from reaching an image sensor (e.g., the image sensor 452 of FIGS. 6 to 10). The coating layer 435 may be defined and/or referred to as a matte coating layer.

Referring to FIG. 13, the guide structure 4351 may include a pattern structure 4351 formed on one surface of at least one yoke 432.

According to an embodiment, the pattern structure 4351 may be formed of any one of a decoration pattern, a three-dimensional pattern formed of a fine hair-line, or repetitive patterns. For example, the pattern structure may be provided in countless fine uneven shapes. For example, the pattern structure may be a structure in which a plurality of circular half-shells or square pyramid shapes (e.g., pyramid shapes) are repeatedly arranged. The pattern may be irregularly or randomly formed across the one surface of the yoke 432.

According to an embodiment, the pattern structure 4351 may diffusely reflect an external light, thereby limiting the external light from reaching the image sensor (e.g., the image sensor 452 of FIGS. 6 to 10).

Referring to FIG. 14, the guide structure 4352 may include at least one groove 4352 formed in one surface of the at least one yoke 432.

According to an embodiment, the at least one groove 4352 may include or may be defined and/or referred to as a recess embedded in one surface of the at least one yoke 432. A plurality of regularly or irregularly arranged grooves 4352 may be provided.

According to an embodiment, the at least one groove 4352 may limit the external light from reaching the image sensor (e.g., the image sensor 452 of FIGS. 6 to 10) by diffusely reflecting the external light.

Referring to FIG. 15, the guide structure 4353 may include at least one hole 4353 formed in one surface of the at least one yoke 432.

According to an embodiment, the at least one hole 4353 may include or may be defined and/or referred to as an opening penetrating one surface of the at least one yoke 432.

According to an embodiment, the at least one hole 4353 may limit the external light from reaching the image sensor (e.g., the image sensor 452 of FIGS. 6 to 10) by diffusely reflecting the external light. A plurality of regularly or irregularly arranged holes 4353 may be provided.

According to an embodiment, the guide structures 435, 4351, 4352, and 4353 may be formed in the entire area on one surface of the at least one yoke 432. According to an embodiment, the guide structures 435, 4351, 4352, and 4353 may be formed in only a partial area (or a specific area) on one surface of the at least one yoke 432.

According to an embodiment, the guide structures 435, 4351, 4352, and 4353 may be formed on one surface of the at least one yoke 432, but are not limited thereto. For example, the guide structures 435, 4351, 4352, and 4353 may be also formed on one surface (e.g., a surface facing the lens assembly 410 of FIGS. 6 to 10) of the magnet or the metal component when the magnet or the metal component directly faces the lens unit (e.g., the lens assembly 410 of FIGS. 6 to 10) inside the camera module (e.g., the camera module 400 of FIGS. 6 to 10). The guide structures 435, 4351, 4352, and 4353 may be formed on a surface of the OIS carrier 413 facing the yoke 432. Thereby, multi-reflections may be avoided.

Further, as illustrated in FIGS. 6 to 10, the guide structures 435, 4351, 4352, and 4353 may be applied to various camera modules in which a hand shaking prevention operation is performed by a spring or various methods, in addition to a type of camera module in which a hand shaking prevention operation is performed by an OIS coil (e.g., the OIS coils 444 and 445 of FIGS. 6 to 10) and an OIS magnet (e.g., the OIS magnets 414 and 415 of FIGS. 6 to 10).

Furthermore, as illustrated in FIGS. 6 to 10, the guide structures 435, 4351, 4352, and 4353 may be applied to various camera modules in which a focus adjustment operation is performed by a spring or various methods, in addition to a type of camera module in which a focus adjustment operation is performed by an AF coil (e.g., the AF coil 443 of FIGS. 6 to 10) and an AF magnet (e.g., the AF magnet 433 of FIGS. 6 to 10).

Furthermore, the guide structures 435, 4351, 4352, and 4353 may be applied to at least one AF magnet (e.g., the AF magnet 433 of FIGS. 6 to 10) of a camera module that does not include at least one yoke (e.g., the at least one yoke 432 of FIGS. 6 to 10). For example, the at least one AF magnet of the camera module that does not include the at least one yoke may be made of a metal material having magnetism, and an external light may be reflected from one surface of the at least one AF magnet to generate noise in the image sensor. According to an embodiment, the guide structures 435, 4351, 4352, and 453 may be formed on one surface (e.g., a surface facing the -X direction of FIGS. 6 to 10) of at least one AF magnet, and the guide structures 435, 4351, 4352, and 453 formed on the at least one AF magnet may absorb or diffusely reflect an external light.

Positions at which the guide structures 435, 4351, 4352, and 4353 are formed are not limited to those described above, and may be formed in various portions capable of forming noise in the image sensor by reflecting an external light inside the camera module.

In embodiments, the different guide structures 435, 4351, 4352, and 4353 described in the context of Fig. 11 to Fig. 15 could be combined. In an embodiment, a coating layer 435 of Fig. 12 could be formed on the pattern 4351 of Fig. 13 or the grooves 4352 of Fig. 14 or surfaces adjacent to the holes 4353 of Fig. 15. In another embodiment, the surface of the at least one yoke 432 may include a pattern 4351 of Fig. 13 and also grooves 4352 and/or holes 4353. In an embodiment, the at least one yoke 432 may include grooves 4352 and holes 4353.

FIG. 16 is a cross-sectional view illustrating a camera module according to an embodiment of the disclosure.

The embodiment of FIG. 16 may be combined with the embodiments of FIGS. 1 to 15, or the embodiments of FIGS. 17 to 19.

Referring to FIG. 16, a camera module 400 (e.g., at least one of camera modules included in the camera assembly 307 of FIGS. 4 to 5, the camera module 400 of FIGS. 6 to 10, or the VST camera modules 1211 and 1212 of FIGS. 17 to 19) includes a casing 401, a first casing 402, a second casing 403, a filter 404, a lens unit 411, a lens unit housing 412, an OIS carrier 413, an AF carrier 431, at least one yoke 432, at least one AF magnet 433, a cover 441, and an AF magnet. It may include a coil 443, a hall sensor 443a, a circuit board 451, or an image sensor 452.

Configurations of the casing 401, the first casing 402, the second casing 403, the filter 404, the lens unit 411, the lens unit housing 412, the OIS carrier 413, the AF carrier 431, the at least one yoke 432, the at least one AF magnet 433, the cover 441, the AF coil 443, the hall sensor 443a, the circuit board 451, or the image sensor 452 as shown in FIG. 16 may be partially or entirely the same as the configurations of the casing 401, the first casing 402, the second casing 403, the filter 404, the lens unit 411, the lens unit housing 412, the OIS carrier 413, the AF carrier 431, the at least one yoke 432, the at least one AF magnet 433, the cover 441, the AF coil 443, the hall sensor 443a, the circuit board 451, or the image sensor 452.

According to an embodiment, the at least one yoke 432 may be disposed to be inclined with respect to an optical axis O direction (e.g., the optical axis O direction of FIGS. 6 to 10 or the Z axis direction of FIG. 16), or a direction OP parallel to the optical axis direction. For example, the at least one yoke 432 may be disposed to be inclined with respect to the direction of the optical axis O such that an upper portion (e.g., a portion facing the -Z direction of FIG. 16) of the at least one yoke 432 is disposed closer to the lens unit 411 than a lower portion (e.g., a portion facing the +Z direction of FIG. 16) of the at least one yoke 432. For example, with respect to the direction OP parallel to the optical axis direction, the angle at which the at least one yoke 432 is inclined may be a specified first angle S.

According to an embodiment, because the at least one yoke 432 is inclined by a specified first angle S with respect to the direction OP parallel to the optical axis direction, when the external light L1 is introduced into a gap (e.g., the gap g of FIG. 7) formed between the first casing 402 and the OIS carrier 413, the image sensor 452 may not be positioned on the traveling path L3 of the external light. As described above, since the at least one yoke 432 is inclined and the image sensor 452 is not disposed on the traveling path of the external light L1, noise such as light leakage or flare is not generated in the image sensor 452, and thus the quality of the image generated by the camera module 400 may be improved.

FIG. 17 is a front perspective view illustrating a wearable electronic device according to an embodiment of the disclosure.

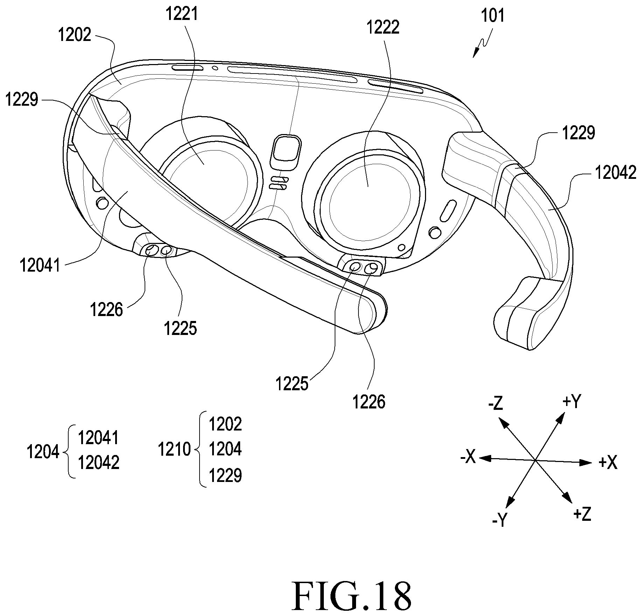

FIG. 18 is a rear perspective view illustrating a wearable electronic device according to an embodiment of the disclosure.

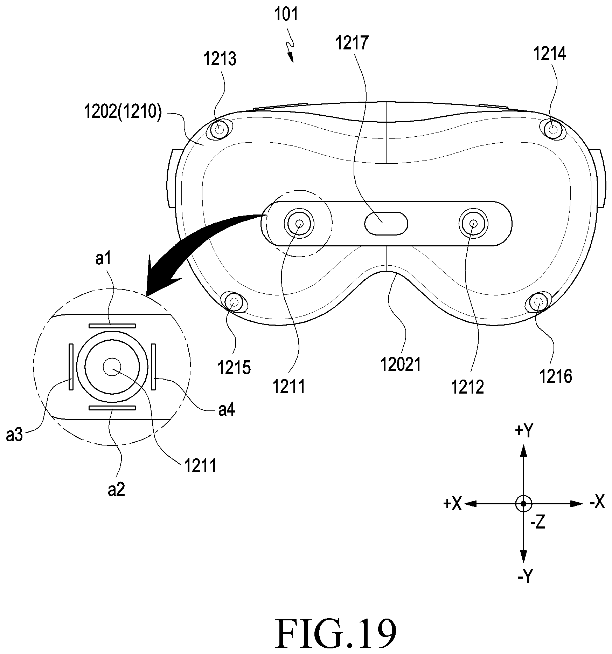

The embodiments of FIGS. 17 to 18 may be combined with the embodiments of FIGS. 1 to 16, or the embodiment of FIG. 19.

The configurations of the wearable electronic device 101 of FIG. 17 may be partially or entirely the same as those of the electronic device 101 of FIG. 1.

Referring to FIGS. 17 to 18, the wearable electronic device 101 may include a housing 1210.

According to an embodiment, the wearable electronic device 101 may be a body wearable device. For example, the wearable electronic device 101 may be a head mounting device (HMD), smart glasses, a pass-through (PT) device, AR glasses, or a video see-through (VST) device, which are capable of directly providing an image in front of the user's eyes. In the illustrated embodiment, it is illustrated that the wearable electronic device 101 has an appearance of goggles, but the wearable electronic device 101 of the disclosure is not limited thereto and may have various types of appearances.

According to an embodiment, the wearable electronic device 101 may include a housing 1210 that forms the exterior of the wearable electronic device 101. According to an embodiment, the housing 1210 may form the exterior of the wearable electronic device 101 and may provide a space in which components of the wearable electronic device 101 may be disposed.

According to an embodiment, the housing 1210 may include a first housing 1202, a second housing 1203, or at least one wearing member 1204. For convenience of description, FIG. 18 illustrates a state in which the second housing 1203 is separated from the wearable electronic device 101.

According to an embodiment, the first housing 1202 may provide a space in which components of the wearable electronic device 101 may be disposed. For example, the first housing 1202 may be referred to as a cover housing or a main body housing.

According to an embodiment, the first housing 1202 may include a nose support portion (e.g., the nose support portion 12021 of FIG. 19) that is at least partially concavely formed. The nose support portion 12021 may be located on the user's nose or may be supported by the user's nose.

According to an embodiment, the wearable electronic device 101 may include a display module (e.g., the display module 160 of FIG. 1) disposed inside the first housing 1210 and capable of outputting a visual image. The display module may output visual images to the left eye and the right eye of the user through the lenses 1221 and 1222 disposed on the rear surface (e.g., the surface facing the +Z direction of FIGS. 17 to 18) of the first housing 1210. For example, the lenses 1221 and 1222 may include a first lens 1221 configured to correspond to the left eye of the user and a second lens 1222 configured to correspond to the right eye of the user.

According to an embodiment, the wearable electronic device 101 may include VST camera modules 1211 and 1212 (e.g., the camera module 400 of FIGS. 6 to 10 or the camera module 400 of FIG. 16), a plurality of camera modules 1213, 1214, 1215, and 1216, and/or an infrared (IR) camera module 1217.

According to an embodiment, the camera modules 1211 to 1217 may be disposed on the first housing 1210 or may be exposed to the outside of the wearable electronic device 101 through an opening formed in the first housing 1210.

According to an embodiment, the VST camera modules 1211 and 1212 (e.g., the camera module 400 of FIGS. 6 to 10 or the camera module 400 of FIG. 16) may be camera modules for video see through (VST). For example, the wearable electronic device 101 may display at least a part (or an object processed based on at least a part and/or an object corresponding to at least a part) of an image associated with the surrounding environment, captured through the VST camera modules 1211 and 1212, on the display module as at least a part of the VST content. Consequently, the user may identify at least a portion of the image associated with the surrounding environment captured through the VST camera modules 1211 and 1212. For example, the VST content may be generated by mixing content for a VR environment with at least some of images captured through the VST camera modules 1211 and 1212. For example, the VST content may be generated by mixing a content for a VR environment with a processing result (or a corresponding object) of at least a portion of an image captured through the VST camera modules 1211 and 1212. For example, the VST content may be generated based on at least a portion of an image captured through the VST camera modules 1211 and 1212. For example, the VST content may be generated based on a processing result (or a corresponding object) of at least a portion of an image captured through the VST camera modules 1211 and 1212.

According to an embodiment, the wearable electronic device 101 may obtain a visual image of an object or environment in the direction the user is looking at or in the direction the wearable electronic device 101 is oriented (e.g., the -Z axis direction of FIGS. 17 to 18), using the plurality of camera modules 1213, 1214, 1214, and 1215.

According to an embodiment, the camera modules 1213 and 1214 may be disposed at a relatively upper portion of the first housing 1202 (or may be exposed through an opening formed in the first housing 1202). The camera modules 1213 and 1214 may capture an image corresponding to a field of view (FOV) based on at least one point of the first housing 1202, for example, a FOV corresponding to the relatively upper side when the user wears the wearable electronic device 101. The image obtained by the camera modules 1213 and 1214 may be used, for example, for simultaneous localization and mapping (SLAM) and/or degrees of freedom (6DoF), and/or may be used for recognition and/or tracking of a subject corresponding to a FOV. The images obtained by the camera modules 1213 and 1214 may also be used for head tracking.

According to an embodiment, the camera modules 1215 and 1216 may be disposed on a relatively lower portion of the first housing 1202 (or may be exposed through an opening formed in the first housing 1202). The upper portion corresponding to the camera modules 1213 and 1214 and the lower portion corresponding to the camera modules 1215 and 1216 are defined when the user wears the wearable electronic device 101, and a portion relatively close to the ground is referred to as the lower portion, and a portion relatively far from the ground is referred to as the upper portion. It will be understood by one of ordinary skill in the art that that the above definition is only for convenience of explanation. The camera modules 1215 and 1216 may capture an image corresponding to a FOV based on at least one point of the first housing 1202, for example, a FOV corresponding to the relatively lower side when a user wears the electronic device 101. The image obtained by the camera modules 1215 and 1216 may be used for recognizing and/or tracking a subject corresponding to the FOV. For example, when the user wears the electronic device 101, the image obtained by the camera modules 1215 and 1216 may be used to recognize and/or track a subject disposed at a relatively lower side than a portion corresponding to the user's head, for example, the user's hand, but is not limited thereto.

According to an embodiment, the wearable electronic device 101 may recognize and/or track a subject, using at least one image captured by the camera modules 1213, 1214, 1215, and 1216. The wearable electronic device 101 may perform an operation identified based on the recognition and/or tracking result, and may provide, for example, a visual object at a location corresponding to a subject, but the operation is not limited thereto. For example, when the virtual keyboard is provided by the wearable electronic device 101, the keys specified in the virtual keyboard may be recognized based on the tracking result of the user's hand. The operation corresponding to the recognition and/or tracking result may be performed alone by, for example, the wearable electronic device 101, but this is merely an example, and the operation may be performed based on cooperation between the wearable electronic device 101 and an external electronic device (e.g., the electronic device 102, the electronic device 104, and/or the server 108 of FIG. 1).

According to an embodiment, the camera modules 1213, 1214, 1215, and 1216 are for head tracking, hand detection, hand tracking, and/or space recognition of 3DoF and 6DoF, and may include, but are not limited to, a global shutter (GS) camera and/or a rolling shutter (RS) camera.

According to an embodiment, the infrared (IR) camera module 1217 may include a time of flight (TOF) camera or a structured light camera. For example, the IR camera module 1217 may operate as at least a part of a sensor module (a sensor module or a Lidar sensor) for detecting a distance to a subject. According to an embodiment, the wearable electronic device 101 may further include a sensor module (e.g., a Lidar sensor). For example, the sensor module may include at least one of a vertical cavity surface emitting laser (VCSEL), an infrared sensor, and/or a photodiode. According to an embodiment, the IR camera module 1217 may be used for identifying a distance to an object (a subject), such as a TOF.

According to an embodiment, the wearable electronic device 101 may include a face tracking camera module 1225. The face tracking camera module 1225 may be used to detect and track a user's facial expression. For example, the face tracking camera module 1225 may be exposed through an opening formed in the first housing 1202.

According to an embodiment, the wearable electronic device 101 may include a microphone module 1226 (e.g., the input module 150 of FIG. 1). The microphone module 1226 may convert sound into an electrical signal. The microphone module 1226 may be used for obtaining voice information. In an embodiment, the microphone module 1226 may be exposed through an opening formed in the first housing 1202.

According to an embodiment, the second housing 1203 may be a portion that comes into contact with the user's face when the user wears the wearable electronic device 101. In addition, the second housing 1203 may be formed in a curved manner, at least in part, to correspond to the user's forehead or cheekbone.

According to an embodiment, when the user wears the wearable electronic device 101, the second housing 1203 may prevent an external light from reaching the user's eyes by coming into contact with the user's face. The second housing 1203 may be referred to as a face cover or a cover housing. For example, the second housing 1203 may be detachably coupled to the rear surface of the first housing 1202.

According to an embodiment, the at least one wearing member 1204 may extend from an end portion of the first housing 1202 and may be supported or positioned on a user's body (e.g., ears). According to an embodiment, the at least one wearing member 1204 may include a first wearing member 12041 supported on the left ear of the user and a second wearing member 12042 supported on the right ear of the user.

According to an embodiment, the housing 1210 may further include at least one hinge structure 1229. According to an embodiment, the at least one wearing member 1204 may be rotatably coupled to the first housing 1210 through the at least one hinge structure 1229. The at least one hinge structure 1229 may be disposed between the first housing 1202 and the at least one wearing member 1204. In the state in which the user does not wear the wearable electronic device 101, the user may carry or store the wearing member 1204 by folding the wearing member 1204 so as to partially overlap the first housing 1202.

According to an embodiment, each of the plurality of camera modules 1213, 1214, 1215, and 1216 may be disposed adjacent to an edge area of the first housing 1202. For example, the plurality of camera modules 1213, 1214, 1215, and 1216 may be disposed at the corners of the first housing 1202 to secure a wider FOV. According to an embodiment, the plurality of camera modules 1213, 1214, 1215, and 1216 may be exposed to the outside of the wearable electronic device 101 through openings formed at the corners of the first housing 1202.

FIG. 19 is a front view illustrating a wearable electronic device according to an embodiment of the disclosure.

The embodiment of FIG. 19 may be combined with the embodiments of FIGS. 1 to 18.

Referring to FIG. 19, a wearable electronic device 101 (e.g., the electronic device 101 of FIG. 1 or the wearable electronic device 101 of FIGS. 17 to 18) may include a housing 1210, a first housing 1202, VST camera modules 1211 and 1212, a plurality of camera modules 1213, 1214, 1215, and 1216, an IF camera module 1217, or a nose support portion 12121.

The configurations of the housing 1210, the first housing 1202, the VST camera modules 1211 and 1212, the plurality of camera modules 1213, 1214, 1215, and 1216, or the IF camera module 1217 of FIG. 19 may be partially or entirely the same as the configurations of the housing 1210, the first housing 1202, the VST camera modules 1211 and 1212, or the plurality of camera modules 1213, 1214, 1215, and 1216, and the IF camera module 1217 of FIGS. 17 to 18.

The configuration of the VST camera modules 1211 and 1212 of FIG. 19 may be partially or entirely the same as the configuration of the camera module 400 of FIGS. 6 to 10 or the camera module 400 of FIG. 16.

According to an embodiment, at least a portion of the first housing 1202 may include a concave nose support portion 12021. The nose support portion 12021 may be positioned on the user's nose or may be supported by the user's nose.

According to an embodiment, the VST camera modules 1211 and 1212 may include a first VST camera module 1211 positioned to correspond to the user's right eye or a second VST camera module 1212 positioned to correspond to the user's left eye.

For convenience of explanation, the following description will focus on the first VST camera module 1211 as an example, but the description thereof may be equally applied to the second VST camera module 1212 and understood accordingly.

According to an embodiment, the first VST camera module 1211 (e.g., the camera module 400 of FIGS. 6 to 10 including the guide structures 435, 4351, 4352, and 4353 of FIGS. 11 to 15 or combinations thereof, or the camera module 400 of FIG. 16) may include a lens unit (e.g., the lens unit 411 of FIGS. 6 to 10, or 16) disposed to face the optical axis direction (e.g., the optical axis O direction of FIGS. 6 to 10).

According to an embodiment, the first VST camera module 1211 may include an AF coil (e.g., the AF coil 443 of FIGS. 6 to 10, or 16) and at least one AF magnet (e.g., the AF magnet 433 of FIGS. 6 to 10, or 16) for a focus adjustment operation.

According to an embodiment, the at least one AF magnet may be covered by at least one yoke (e.g., the at least one yoke 432 of FIGS. 6 to 10, or 16).

According to an embodiment, the at least one yoke may face an OIS carrier (e.g., the OIS carrier 413 of FIGS. 6 to 10, or 16) or a lens unit (e.g., the lens assembly 410 of FIGS. 6 to 10, or 16) of the first VST camera module 1211.

According to an embodiment, when the wearable electronic device 101 is viewed from the front (e.g., when viewed as shown in FIG. 19), the at least one yoke, the at least one AF magnet, and the at least one AF coil of the first VST camera module 1211 may be disposed on areas a3 and a4 positioned in the width direction (e.g., the X-axis direction of FIG. 19) of the wearable electronic device 101.

For example, due to the influence of gravity, the lens portion of the first VST camera module 1211 may be disposed to be relatively biased downward (e.g., in the - Y direction of FIG. 19) within the casing (e.g., the casings 402 and 403 of FIG. 8). As such, when the lens unit is biased downward from the inside of the casing, a gap (e.g., the gap g of FIG. 7) may be formed between the first casing (e.g., the first casing 402 of FIGS. 7 to 8) and the OIS carrier (e.g., the OIS carrier 413 of FIGS. 6 to 10). As described above, when an external light is introduced in such a state where a gap is formed, and if the at least one yoke, the at least one AF magnet, and the at least one AF coil are disposed on areas a1 and a2 positioned in the height direction (e.g., the Y-axis direction of FIG. 19) of the wearable electronic device 101, the external light may be reflected by the at least one yoke and introduced into an image sensor (e.g., the image sensor 452 of FIGS. 6 to 10).

According to an embodiment, when the at least one yoke, the at least one AF magnet, and the at least one AF coil of the first VST camera module 1211 are disposed on the areas a3 and a4 positioned in the width direction (e.g., the X-axis direction of FIG. 19) of the wearable electronic device 101, even if a gap due to gravity is formed, the at least one yoke is not disposed in the areas a1 and a2, and thus it may prevent an external light from being reflected from and reaching the image sensor.

According to an embodiment, a guide structure (e.g., the guide structures 435, 4351, 4352, and 4353 of FIGS. 12 to 15) as illustrated in FIGS. 11 to 15 or combinations thereof may be formed in at least one yoke disposed on the areas a3 and a4 in the width direction (e.g., the X-axis direction of FIG. 19) of the wearable electronic device 101. The at least one yoke may be disposed to be inclined by a specified first angle (e.g., the first angle S of FIG. 16) with respect to the optical axis direction, like the at least one yoke of FIG. 16. Accordingly, during the hand shaking correction operation of the first VST camera module 1211, the external light may be limited from reaching the image sensor.

A plurality of camera modules may be provided in an electronic device (e.g., a smartphone or a wearable electronic device). At least one of the plurality of camera modules may be provided with image stabilization or focus adjustment function to improve the quality of an image generated from the camera module.

For example, the camera module may provide image stabilization or focus adjustment function by moving the lens assembly relative to the image sensor. Such image stabilization or focus adjustment function may be provided by moving the lens assembly through the driving force generated by the interaction of the plurality of magnets and the electromagnetic force formed by the plurality of coils.

On the other hand, as the lens assembly moves relative to the image sensor, a gap in which an external light may be introduced may be formed between the casing of the camera module and the lens assembly. There is a problem that the external light, introduced through such a gap, is reflected from a component of the camera module inside the camera module and reaches the image sensor. In this case, a problem occurs as the external light, introduced and reflected through the gap, produces noise in the image generated from the external light introduced along the optical axis direction through the lens assembly.

According to an embodiment of the disclosure, a camera module including a guide structure capable of limiting a path of an external light and an electronic device including the same may be provided.

According to an embodiment of the disclosure, since the guide structure of the camera module and/or the electronic device limits the path of the external light, the quality of the image generated through the camera module may be improved.

Effects obtainable from the disclosure are not limited to the above-mentioned effects, and other effects not mentioned would be clearly understood by those skilled in the art from the following description.

According to an embodiment of the disclosure, the camera module 400 may include a casing 401, a lens assembly 410, an AF assembly 430, at least one OIS magnet 414 or 415, or an image sensor 452. The lens assembly may be disposed in the casing. The lens assembly may include an OIS carrier 413 or a lens unit 411. The AF assembly may be disposed in the casing. The AF carrier may be operatively connected to the lens unit to move the lens unit in an optical axis direction. The AF assembly may include an AF magnet 433, a yoke 432, or an AF carrier 431. The at least one OIS magnet may be operatively connected to the lens unit to move the lens unit in a direction perpendicular to the optical axis direction. The at least one OIS magnet may be disposed on the OIS carrier. The image sensor may be disposed to be aligned with the lens unit in the optical axis direction. One surface of the yoke facing the OIS carrier may include guide structures 435, 4351, 4352, and 4353. The guide structure may be configured to limit a path of the external light so that the external light introduced into the casing does not reach the image sensor after being reflected from one surface of the yoke.

According to an embodiment, the guide structure may include a coating layer 435 stacked on one surface of the yoke.

According to an embodiment, the coating layer may include substantially black.

According to an embodiment, the guide structure may include a pattern structure 4351 formed on one surface of the yoke.

According to an embodiment, the guide structure may include at least one groove 4352 formed in one surface of the yoke.

According to an embodiment, the guide structure may include at least one hole 4353 formed in one surface of the yoke.

According to an embodiment, the yoke may be disposed to be inclined with respect to the optical axis direction.

According to an embodiment, the yoke may cover the AF magnet. The at least one OIS magnet may include a first OIS magnet 414 or a second OIS magnet 415. The second OIS magnet may be disposed to face a direction different from that of the first OIS magnet.

According to an embodiment, the first OIS magnet may be configured to move the lens unit in a first OIS direction perpendicular to the optical axis direction. The second OIS magnet may be configured to move the lens unit in a second OIS direction perpendicular to the optical axis direction and the first OIS direction.

According to an embodiment, the camera module may include an AF coil 443, a first OIS coil 444, or a second OIS coil 445. The AF coil may face the AF magnet. The first OIS coil may face the first OIS magnet. The second OIS coil may face the second OIS magnet.

According to an embodiment, the camera module may further include at least one hall sensor 443a, 444a, or 445a disposed inside at least one of the AF coil, the first OIS coil, or the second OIS coil.

According to an embodiment, the guide structure may be configured to limit the path of the external light introduced through a gap formed between the casing and the OIS carrier when the OIS carrier moves relative to the casing.

According to an embodiment, the camera module may further include a circuit board 451 or a flexible printed circuit board 453. The image sensor may be disposed on the circuit board. The flexible printed circuit board may be extended from the circuit board.

According to an embodiment, the camera module may further include a filter 404. The filter may be disposed on the casing. The filter may be located between the lens assembly and the image sensor.

According to an embodiment, the electronic device 101 may include housings 301 and 1210 or camera modules 307, 400, 1211, 1211, and 1212. The camera module may be disposed in the housing. The camera module may include a casing 401, a lens assembly 410, an AF assembly 430, at least one OIS magnet 414 and 415, or an image sensor 452. The lens assembly may be disposed in the casing. The lens assembly may include an OIS carrier 413 or a lens unit 411. The AF assembly may be disposed in the casing. The AF assembly may be operatively connected to the lens unit to move the lens unit in an optical axis direction. The AF assembly may include an AF magnet 433, a yoke 432, or an AF carrier 431. The at least one OIS magnet may be operatively connected to the lens unit to move the lens unit in a direction perpendicular to the optical axis direction. The at least one OIS magnet may be disposed on the OIS carrier. The image sensor may be disposed to be aligned with the lens unit in the optical axis direction. One surface of the yoke facing the OIS carrier may include guide structures 435, 4351, 4352, and 4353. The guide structure may be configured to limit a path of the external light so that the external light introduced into the casing does not reach the image sensor after being reflected from one surface of the yoke.

According to an embodiment, the guide structure may include a coating layer 435 stacked on one surface of the yoke.

According to an embodiment, the guide structure may include a pattern structure 4351 formed on one surface of the yoke.

According to an embodiment, the guide structure may include at least one groove 4352 formed in one surface of the yoke.

According to an embodiment, the guide structure may include at least one hole 4353 formed in one surface of the yoke.

According to an embodiment, the yoke may be disposed to be inclined with respect to the optical axis direction.

In the detailed description of the disclosure, specific embodiments have been described. The claimed scope of protection, which is defined by the appended claims, corresponds to embodiments of the description in paragraphs [29], [80], [93]-[95], [99], [103]-[104], [115], [144], [148], [164], [156], [196], [198], [203], [242] and [256]. Additional embodiments of the description are further examples.

## Claims

1. A camera module (400) comprising:
a casing (401);
a lens assembly (410) disposed in the casing, and including an optical image stabilization, OIS, carrier (413) and a lens unit (411);
an auto focus, AF, assembly (430) disposed in the casing, operatively connected to the lens unit (411) to move the lens unit (411) in an optical axis direction, and including an AF magnet (433), an AF coil (443), a yoke (432), and an AF carrier (431);
at least one OIS magnet (414, 415) and at least one OIS coil (444, 445) operatively connected to the lens unit (411) to move the lens unit (411) in a direction perpendicular to the optical axis direction, and disposed on the OIS carrier (413); and
an image sensor (452) disposed to be aligned with the lens unit (411) in the optical axis direction;
**characterized in that** one surface of the yoke (432) facing the OIS carrier (413) includes a guide structure (435, 4351, 4352, 4353) configured to limit a path of external light so that the external light introduced into the casing (401) substantially does not reach the image sensor after being reflected from the one surface of the yoke (432).

2. The camera module of claim 1, wherein the guide structure comprises a coating layer (435) stacked on one surface of the yoke (432).

3. The camera module of claim 2, wherein the coating layer (435) is substantially black.

4. The camera module of claim 1, wherein the guide structure comprises a pattern structure (4351) formed on one surface of the yoke (432).

5. The camera module of claim 1, wherein the guide structure comprises at least one groove (4352) formed in one surface of the yoke (432).

6. The camera module of claim 1, wherein the guide structure comprises at least one hole (4353) formed in one surface of the yoke (432).

7. The camera module of claim 1, wherein the yoke (432) is disposed to be inclined with respect to the optical axis direction.

8. The camera module of any one of claims 1 to 7, wherein the yoke (432) covers the AF magnet (433), and
wherein the at least one OIS magnet (414, 415) includes:
a first OIS magnet (414); and
a second OIS magnet (415) disposed to face in a direction different from the first OIS magnet (414).

9. The camera module of claim 8, wherein the first OIS magnet (414) is configured to move the lens unit (411) in a first OIS direction perpendicular to the optical axis direction, and
wherein the second OIS magnet (415) is configured to move the lens unit (411) in a second OIS direction perpendicular to the optical axis direction and the first OIS direction.

10. The camera module of claims 8 or 9, further comprising:
an AF coil (443) facing the AF magnet (433);
a first OIS coil (444) facing the first OIS magnet (414); and
a second OIS coil (445) facing the second OIS magnet (415).

11. The camera module of claim 10, further comprising at least one hall sensor (443a, 444a, 445a) disposed inside at least one of the AF coil (443), the first OIS coil (444), or the second OIS coil (445).

12. The camera module of any one of claims 1 to 11, wherein the guide structure is configured to limit the path of the external light introduced through a gap formed between the casing (401) and the OIS carrier (413) when the OIS carrier (413) moves relative to the casing (401).

13. The camera module of any one of claims 1 to 12, further comprising:
a circuit board (451) on which the image sensor (452) is disposed; and
a flexible printed circuit board (453) extended from the circuit board (451).

14. The camera module of any one of claims 1 to 13, further comprising a filter (404) disposed in the casing (401) and located between the lens assembly (410) and the image sensor (452).

15. An electronic device (101), comprising:
a housing (301, 1210); and
a camera module (307, 400, 1211, 1212) disposed in the housing,
wherein the camera module comprises:
a casing (401);
a lens assembly (410) disposed in the casing (401), and including an optical image stabilization, OIS, carrier (413) and a lens unit (411);
an auto focus, AF, assembly (430) disposed in the casing (401), operatively connected to the lens unit (411) to move the lens unit (411) in an optical axis direction, and including an AF magnet (433), an AF coil (443), a yoke (432), and an AF carrier (431);
at least one OIS magnet (414, 415) and at least one OIS coil (444, 445) operatively connected to the lens unit (411) to move the lens unit (411) in a direction perpendicular to the optical axis direction, and disposed on the OIS carrier (413); and
an image sensor (452) disposed to be aligned with the lens unit (411) in the optical axis direction,
**characterized in that** one surface of the yoke (432) facing the OIS carrier (413) includes a guide structure (435, 4351, 4352, 4353) configured to limit a path of external light so that the external light introduced into the casing (401) substantially does not reach the image sensor after being reflected from the one surface of the yoke (432).

## Patentansprüche

1. Kameramodul (400), umfassend:
eine Umhüllung (401);
eine in der Umhüllung angeordnete Linsenbaugruppe (410), die einen optischen Bildstabilisierungs-, OIS, -Träger (413) und eine Linseneinheit (411) umfasst;
eine in der Umhüllung angeordnete Autofokus-, AF, -Baugruppe (430), die funktionsmäßig mit der Linseneinheit (411) verbunden ist, um die Linseneinheit (411) in Richtung einer optischen Achse zu bewegen, und die einen AF-Magneten (433), eine AF-Spule (443), ein Joch (432) und einen AF-Träger (431) umfasst;
mindestens einen OIS-Magneten (414, 415) und mindestens eine OIS-Spule (444, 445), die funktionsmäßig mit der Linseneinheit (411) verbunden sind, um die Linseneinheit (411) in einer Richtung senkrecht zur Richtung der optischen Achse zu bewegen, und die auf dem OIS-Träger (413) angeordnet sind; und
einen Bildsensor (452), der so angeordnet ist, dass er in Richtung der optischen Achse auf die Linseneinheit (411) ausgerichtet ist;
**dadurch gekennzeichnet, dass** eine dem OIS-Träger (413) zugewandte Oberfläche des Jochs (432) eine Führungsstruktur (435, 4351, 4352, 4353) umfasst, die dazu konfiguriert ist, einen Weg von Außenlicht so zu begrenzen, dass das in die Umhüllung (401) eingeleitete Außenlicht den Bildsensor im Wesentlichen nicht erreicht, nachdem es von der einen Oberfläche des Jochs (432) reflektiert wurde.

2. Kameramodul nach Anspruch 1, wobei die Führungsstruktur eine Beschichtungsschicht (435) umfasst, die auf einer Oberfläche des Jochs (432) gestapelt ist.

3. Kameramodul nach Anspruch 2, wobei die Beschichtungsschicht (435) im Wesentlichen schwarz ist.

4. Kameramodul nach Anspruch 1, wobei die Führungsstruktur eine Musterstruktur (4351) umfasst, die auf einer Oberfläche des Jochs (432) ausgebildet ist.

5. Kameramodul nach Anspruch 1, wobei die Führungsstruktur mindestens eine Nut (4352) umfasst, die in einer Oberfläche des Jochs (432) ausgebildet ist.

6. Kameramodul nach Anspruch 1, wobei die Führungsstruktur mindestens ein Loch (4353) umfasst, das in einer Oberfläche des Jochs (432) ausgebildet ist.

7. Kameramodul nach Anspruch 1, wobei das Joch (432) so angeordnet ist, dass es in Bezug auf die Richtung der optischen Achse geneigt ist.

8. Kameramodul nach einem der Ansprüche 1 bis 7, wobei das Joch (432) den AF-Magneten (433) abdeckt, und
wobei der mindestens eine OIS-Magnet (414, 415) Folgendes umfasst:
einen ersten OIS-Magneten (414); und
einen zweiten OIS-Magneten (415), der so angeordnet ist, dass er in eine andere Richtung als der erste OIS-Magnet (414) weist.

9. Kameramodul nach Anspruch 8, wobei der erste OIS-Magnet (414) dazu konfiguriert ist, die Linseneinheit (411) in einer ersten OIS-Richtung senkrecht zur Richtung der optischen Achse zu bewegen, und
wobei der zweite OIS-Magnet (415) dazu konfiguriert ist, die Linseneinheit (411) in einer zweiten OIS-Richtung senkrecht zur Richtung der optischen Achse und zur ersten OIS-Richtung zu bewegen.

10. Kameramodul nach Anspruch 8 oder 9, umfassend ferner:
eine dem AF-Magneten (433) zugewandte AF-Spule (443);
eine dem ersten OIS-Magneten (414) zugewandte erste OIS-Spule (444); und
eine dem zweiten OIS-Magneten (415) zugewandte zweite OIS-Spule (445).

11. Kameramodul nach Anspruch 10, umfassend ferner mindestens einen Hall-Sensor (443a, 444a, 445a), der innerhalb mindestens einer von der AF-Spule (443), der ersten OIS-Spule (444) und der zweiten OIS-Spule (445) angeordnet ist.

12. Kameramodul nach einem der Ansprüche 1 bis 11, wobei die Führungsstruktur dazu konfiguriert ist, den Weg des durch einen zwischen der Umhüllung (401) und dem OIS-Träger (413) ausgebildeten Spalt eingeleiteten Außenlichts zu begrenzen, wenn sich der OIS-Träger (413) relativ zur Umhüllung (401) bewegt.

13. Kameramodul nach einem der Ansprüche 1 bis 12, umfassend ferner:
eine Schaltungsplatine (451), auf der der Bildsensor (452) angeordnet ist; und
eine flexible Leiterplatte (453), die sich von der Schaltungsplatine (451) erstreckt.

14. Kameramodul nach einem der Ansprüche 1 bis 13, umfassend ferner einen Filter (404), der in der Umhüllung (401) angeordnet ist und sich zwischen der Linsenbaugruppe (410) und dem Bildsensor (452) befindet.

15. Elektronische Vorrichtung (101), umfassend:
ein Gehäuse (301, 1210); und
ein in dem Gehäuse angeordnetes Kameramodul (307, 400, 1211, 1212),
wobei das Kameramodul Folgendes umfasst:
eine Umhüllung (401);
eine in der Umhüllung (401) angeordnete Linsenbaugruppe (410), die einen optischen Bildstabilisierungs-, OIS, -Träger (413) und eine Linseneinheit (411) umfasst;
eine in der Umhüllung (401) angeordnete Autofokus-, AF, -Baugruppe (430), die funktionsmäßig mit der Linseneinheit (411) verbunden ist, um die Linseneinheit (411) in Richtung einer optischen Achse zu bewegen, und die einen AF-Magneten (433), eineAF-Spule (443), ein Joch (432) und einen AF-Träger (431) umfasst;
mindestens einen OIS-Magneten (414, 415) und mindestens eine OIS-Spule (444, 445), die funktionsmäßig mit der Linseneinheit (411) verbunden sind, um die Linseneinheit (411) in einer Richtung senkrecht zur Richtung der optischen Achse zu bewegen, und die auf dem OIS-Träger (413) angeordnet sind; und
einen Bildsensor (452), der so angeordnet ist, dass er in Richtung der optischen Achse auf die Linseneinheit (411) ausgerichtet ist,
**dadurch gekennzeichnet, dass** eine dem OIS-Träger (413) zugewandte Oberfläche des Jochs (432) eine Führungsstruktur (435, 4351, 4352, 4353) umfasst, die dazu konfiguriert ist, einen Weg von Außenlicht so zu begrenzen, dass das in die Umhüllung (401) eingeleitete Außenlicht den Bildsensor im Wesentlichen nicht erreicht, nachdem es von der einen Oberfläche des Jochs (432) reflektiert wurde.

## Revendications

1. Module de caméra (400) comprenant :
un boîtier de module (401) ;
un ensemble de lentilles (410) disposé dans le boîtier de module, et comprenant un support de stabilisation optique d'image, OIS, (413) et une unité de lentilles (411) ;
un ensemble de mise au point automatique, AF, (430) disposé dans le boîtier de module, relié de manière opératoire à l'unité de lentilles (411) pour déplacer l'unité de lentilles (411) dans une direction d'axe optique, et comprenant un aimant AF (433), une bobine AF (443), une culasse magnétique (432) et un support AF (431) ;
au moins un aimant OIS (414, 415) et au moins une bobine OIS (444, 445) reliés de manière opératoire à l'unité de lentilles (411) pour déplacer l'unité de lentilles (411) dans une direction perpendiculaire à la direction d'axe optique, et disposés sur le support OIS (413) ; et
un capteur d'image (452) disposé de manière à être aligné avec l'unité de lentilles (411) dans la direction d'axe optique ;
**caractérisé en ce qu'**une surface de la culasse magnétique (432) faisant face au support OIS (413) comprend une structure de guidage (435, 4351, 4352, 4353) configurée pour limiter un trajet de lumière externe de sorte que la lumière externe introduite dans le boîtier de module (401) n'atteigne sensiblement pas le capteur d'image après avoir été réfléchie par ladite surface de la culasse magnétique (432).

2. Module de caméra selon la revendication 1, dans lequel la structure de guidage comprend une couche de revêtement (435) empilée sur une surface de la culasse magnétique (432).

3. Module de caméra selon la revendication 2, dans lequel la couche de revêtement (435) est sensiblement noire.

4. Module de caméra selon la revendication 1, dans lequel la structure de guidage comprend une structure de motifs (4351) formée sur une surface de la culasse magnétique (432).

5. Module de caméra selon la revendication 1, dans lequel la structure de guidage comprend au moins une rainure (4352) formée dans une surface de la culasse magnétique (432).

6. Module de caméra selon la revendication 1, dans lequel la structure de guidage comprend au moins un trou (4353) formé dans une surface de la culasse magnétique (432).

7. Module de caméra selon la revendication 1, dans lequel la culasse magnétique (432) est disposée de manière à être inclinée par rapport à la direction d'axe optique.

8. Module de caméra selon l'une quelconque des revendications 1 à 7, dans lequel la culasse magnétique (432) recouvre l'aimant AF (433), et
dans lequel ledit au moins un aimant OIS (414, 415) comprend :
un premier aimant OIS (414) ; et
un second aimant OIS (415) disposé de manière à faire face dans une direction différente de celle du premier aimant OIS (414).

9. Module de caméra selon la revendication 8, dans lequel le premier aimant OIS (414) est configuré pour déplacer l'unité de lentilles (411) dans une première direction OIS perpendiculaire à la direction d'axe optique, et
dans lequel le second aimant OIS (415) est configuré pour déplacer l'unité de lentilles (411) dans une deuxième direction OIS perpendiculaire à la direction d'axe optique et à la première direction OIS.

10. Module de caméra selon les revendications 8 ou 9, comprenant en outre :
une bobine AF (443) faisant face à l'aimant AF (433) ;
une première bobine OIS (444) faisant face au premier aimant OIS (414) ; et
une seconde bobine OIS (445) faisant face au second aimant OIS (415).

11. Module de caméra selon la revendication 10, comprenant en outre au moins un capteur à effet Hall (443a, 444a, 445a) disposé à l'intérieur d'au moins une parmi la bobine AF (443), la première bobine OIS (444) ou la seconde bobine OIS (445).

12. Module de caméra selon l'une quelconque des revendications 1 à 11, dans lequel la structure de guidage est configurée pour limiter le trajet de la lumière externe introduite à travers un espace formé entre le boîtier de module (401) et le support OIS (413) lorsque le support OIS (413) se déplace par rapport au boîtier de module (401).

13. Module de caméra selon l'une quelconque des revendications 1 à 12, comprenant en outre :
une carte de circuit (451) sur laquelle le capteur d'image (452) est disposé ; et
une carte de circuit imprimé flexible (453) s'étendant depuis la carte de circuit (451).

14. Module de caméra selon l'une quelconque des revendications 1 à 13, comprenant en outre un filtre (404) disposé dans le boîtier de module (401) et situé entre l'ensemble de lentilles (410) et le capteur d'image (452).

15. Dispositif électronique (101), comprenant :
un boîtier (301, 1210) ; et
un module de caméra (307, 400, 1211, 1212) disposé dans le boîtier,
dans lequel le module de caméra comprend :
un boîtier de module (401) ;
un ensemble de lentilles (410) disposé dans le boîtier de module (401), et comprenant un support de stabilisation optique d'image, OIS, (413) et une unité de lentilles (411) ;
un ensemble de mise au point automatique, AF, (430) disposé dans le boîtier de module (401), relié de manière opératoire à l'unité de lentilles (411) pour déplacer l'unité de lentilles (411) dans une direction d'axe optique, et comprenant un aimant AF (433), une bobine AF (443), une culasse magnétique (432) et un support AF (431) ;
au moins un aimant OIS (414, 415) et au moins une bobine OIS (444, 445) reliés de manière opératoire à l'unité de lentilles (411) pour déplacer l'unité de lentilles (411) dans une direction perpendiculaire à la direction d'axe optique, et disposés sur le support OIS (413) ; et
un capteur d'image (452) disposé de manière à être aligné avec l'unité de lentilles (411) dans la direction d'axe optique,
**caractérisé en ce qu'**une surface de la culasse magnétique (432) faisant face au support OIS (413) comprend une structure de guidage (435, 4351, 4352, 4353) configurée pour limiter un trajet de lumière externe de sorte que la lumière externe introduite dans le boîtier de module (401) n'atteigne sensiblement pas le capteur d'image après avoir été réfléchie par ladite surface de la culasse magnétique (432).
